(19) Europäisches Patentamt
European Patent Office
Office européen des brevets

(11) **EP 4 344 200 A1**

(12) **EUROPEAN PATENT APPLICATION**
published in accordance with Art. 153(4) EPC

(43) Date of publication:
**27.03.2024  Bulletin 2024/13**

(21) Application number: **21943597.1**

(22) Date of filing: **04.06.2021**

(51) International Patent Classification (IPC):
**H04N 19/00** (2014.01)       **G06T 9/00** (2006.01)

(52) Cooperative Patent Classification (CPC):
**G06T 9/00; H04N 19/00**

(86) International application number:
**PCT/CN2021/098484**

(87) International publication number:
**WO 2022/252236 (08.12.2022 Gazette 2022/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.**
**Longgang**
**Shenzhen, Guangdong 518129 (CN)**

(72) Inventors:
 • TU, Chenxi
   Shenzhen, Guangdong 518129 (CN)
 • CAI, Kangying
   Shenzhen, Guangdong 518129 (CN)
 • CAO, Xiaoran
   Shenzhen, Guangdong 518129 (CN)
 • WANG, Pei
   Shenzhen, Guangdong 518129 (CN)

(74) Representative: **Gill Jennings & Every LLP**
**The Broadgate Tower**
**20 Primrose Street**
**London EC2A 2ES (GB)**

(54) **METHODS AND APPARATUS FOR ENCODING AND DECODING 3D MAP**

(57) This application provides a 3D map encoding and decoding method and apparatus. The 3D map encoding method in this application includes: predicting a spatial location of a current 3D map point based on a spatial location of a reference 3D map point to obtain residual data of the spatial location of the current 3D map point, where the current 3D map point and the reference 3D map point belong to a 3D map, the reference 3D map point is a 3D map point that has been encoded before the current 3D map point is encoded, the 3D map includes a plurality of 3D map points, and the 3D map point includes a spatial location; and encoding the residual data of the spatial location of the current 3D map point to obtain a bitstream. In this application, a data amount of the 3D map can be reduced, so that transmission bandwidth is reduced, and transmission efficiency is improved.

_500_

Sort a plurality of 3D map points included in a 3D map, to obtain a re-sorted sequence of the plurality of 3D map points — 501

Determine a reference 3D map point of a current 3D map point — 502

Predict a spatial location of the current 3D map point based on a spatial location of the reference 3D map point to obtain residual data of the spatial location of the current 3D map point — 503

Encode the residual data of the spatial location of the current 3D map point to obtain a bitstream — 504

FIG. 5

**Description**

**TECHNICAL FIELD**

This application relates to 3D map technologies, and in particular, to a 3D map encoding and decoding method and apparatus.

**BACKGROUND**

Virtual reality (virtual reality, VR), augmented reality (augmented reality, AR), and mixed reality (mixed reality, MR) technologies are new multimedia virtual scene technologies in recent years. These technologies can create virtual reality, and superimpose the virtual reality on the real world, to generate a new visual environment and interactive experience. In such application, an electronic device needs to determine pose information of the electronic device in a current environment, to accurately implement fusion of a virtual object and a real scene.

In addition, in application like autonomous driving, autonomous navigation, automatic inspection of an uncrewed aerial vehicle, and an industrial robot, a vehicle like an automobile, an uncrewed aerial vehicle, or a robot needs to determine a pose of the vehicle in a current environment by determining a pose of an electronic device mounted on the vehicle, to perform accurate path planning, navigation, detection, and control.

In the foregoing application, for a problem that the pose of the electronic device in the current environment needs to be determined, a typical solution is as follows: The electronic device receives, from a server or another device, a 3D map of the environment in which the electronic device is located, then captures visual information in the environment by using a local sensor, and determines the current pose of the electronic device based on the captured visual information and the downloaded 3D map.

However, the original 3D map usually includes a large amount of data, and transmission of the map is bandwidth- and time-consuming. This greatly limits application performance and affects user experience.

**SUMMARY**

This application provides a 3D map encoding and decoding method and apparatus, to reduce a data amount of a 3D map, so as to reduce transmission bandwidth and improve transmission efficiency.

According to a first aspect, this application provides a 3D map encoding method, including: predicting a spatial location of a current 3D map point based on a spatial location of a reference 3D map point to obtain residual data of the spatial location of the current 3D map point, where the current 3D map point and the reference 3D map point belong to a 3D map, the reference 3D map point is a 3D map point that has been encoded before the current 3D map point is encoded, the 3D map includes a plurality of 3D map points, and the 3D map point includes a spatial location; and encoding the residual data of the spatial location of the current 3D map point to obtain a bitstream.

The spatial location may be represented by xyz-axis coordinates, or may be represented by longitude-latitude coordinates, or may be represented by polar coordinates. The residual data of the spatial location of the current 3D map point may be encapsulated to obtain the bitstream. After the bitstream is obtained, the bitstream may be stored, or the bitstream may be sent to a decoding apparatus.

In the encoding method, a data amount of the residual data is relatively small. When an encoding apparatus stores the bitstream, storage space for storing the 3D map by the encoding apparatus can be reduced. When an encoding apparatus sends the bitstream, bandwidth usage during transmission of the 3D map can be reduced, and transmission efficiency of the 3D map can be improved.

In a possible implementation, before the predicting a spatial location of a current 3D map point based on a spatial location of a reference 3D map point to obtain residual data of the spatial location of the current 3D map point, the method further includes: determining the reference 3D map point.

In a possible implementation, before the determining the reference 3D map point, the method further includes: sorting the plurality of 3D map points to obtain a re-sorted sequence of the plurality of 3D map points.

Optionally, the plurality of 3D map points may be sorted based on data of the plurality of 3D map points, and the data of the 3D map points may include spatial locations of the 3D map points.

In a possible implementation, the re-sorted sequence is represented by a sequence, and two adjacent 3D map points in the sequence are associated based on a distance. The sequence may include a list, an array, a character string, and the like. A representation form of the sequence is not limited in this embodiment of this application.

In a possible implementation, the sorting the plurality of 3D map points to obtain a re-sorted sequence of the plurality of 3D map points includes: adding, to the sequence, a 3D map point that is in at least one 3D map point not added to the sequence and that is closest to a previous 3D map point added to the sequence, and arranging the 3D map point after the previous 3D map point added to the sequence, where the plurality of 3D map points include the at least one 3D map point not added to the sequence.

In the sequence obtained in the foregoing manner, two adjacent 3D map points are associated based on a distance. Usually, it may be considered that two 3D map points that are closer to each other have a higher similarity. In this way, the plurality of 3D map points sorted based on distances between the 3D map points can ensure at least a relatively high similarity between two adjacent 3D map points, so that an overall similarity between the plurality of 3D map points in the sequence is improved.

When the re-sorted sequence is represented by a sequence, and the re-sorted sequence is obtained in the foregoing manner, in a possible implementation, the determining the reference 3D map point includes: determining a first 3D map point as the reference 3D map point, where the first 3D map point is a previous 3D map point of the current 3D map point in the sequence.

In this implementation, a similarity between the first 3D map point and the current 3D map point is relatively high. The first 3D map point is determined as the reference 3D map point, and the current 3D map point is subsequently predicted based on the first 3D map point, so that prediction effect can be improved, and a data amount of the residual data obtained through prediction can be effectively reduced.

In a possible implementation, the determining the reference 3D map point includes: determining both a first 3D map point and a second 3D map point as the reference 3D map point, where the first 3D map point is a previous 3D map point of the current 3D map point in the sequence, and the second 3D map point is a previous 3D map point of the first 3D map point in the sequence.

In this implementation, a similarity between the first 3D map point and the current 3D map point is relatively high, a similarity between the second 3D map point and the first 3D map point is relatively high, and therefore a similarity between the second 3D map point and the current 3D map point is also relatively high. The first 3D map point and the second 3D map point are determined as the reference 3D map point, and the current 3D map is subsequently predicted with reference to the first 3D map point and the second 3D map point, so that prediction accuracy can be improved, and then a data amount of the residual data obtained through prediction is further reduced.

In a possible implementation, the re-sorted sequence is represented by a topology tree, and in the topology tree, a 3D map point located at a parent node and a 3D map point located at a child node are associated based on a distance. The topology tree may include a B tree, a B+ tree, a B* tree, a hash tree, and the like. A representation form of the topology tree is not limited in this embodiment of this application.

In a possible implementation, the sorting the plurality of 3D map points to obtain a re-sorted sequence of the plurality of 3D map points includes: adding, to the topology tree, a 3D map point that is in at least one 3D map point not added to the topology tree and that is closest to at least one 3D map point that has been added to the topology tree, and arranging the 3D map point at a child-node location of a closest 3D map point in the at least one 3D map point that has been added to the topology tree, where the plurality of 3D map points include the at least one 3D map point not added to the topology tree.

In the topology tree obtained in the foregoing manner, a parent node and a child node are associated based on a distance. Usually, it may be considered that two 3D map points that are closer to each other have a higher similarity. In this way, the plurality of 3D map points sorted based on distances between the 3D map points can ensure at least a relatively high similarity between two 3D map points on a parent node and a child node, so that an overall similarity between the plurality of 3D map points in the topology tree is improved.

When the re-sorted sequence is represented by a topology tree, and the re-sorted sequence is obtained in the foregoing manner, in a possible implementation, the determining the reference 3D map point includes: determining a third 3D map point as the reference 3D map point, where the third 3D map point is a 3D map point at a parent-node location of the current 3D map point in the topology tree.

In this implementation, a similarity between the third 3D map point and the current 3D map point is relatively high. The third 3D map point is determined as the reference 3D map point, and the current 3D map point is subsequently predicted based on the third 3D map point, so that prediction effect can be improved, and a data amount of the residual data obtained through prediction can be effectively reduced.

In a possible implementation, the determining the reference 3D map point includes: determining both a third 3D map point and a fourth 3D map point as the reference 3D map point, where the third 3D map point is a 3D map point at a parent-node location of the current 3D map point in the topology tree, and the fourth 3D map point is a 3D map point at a parent-node location of the third 3D map point in the topology tree.

In this implementation, a similarity between the third 3D map point and the current 3D map point is relatively high, a similarity between the fourth 3D map point and the third 3D map point is relatively high, and therefore a similarity between the fourth 3D map point and the current 3D map point is also relatively high. The third 3D map point and the fourth 3D map point are determined as the reference 3D map point, and the current 3D map is subsequently predicted with reference to the third 3D map point and the fourth 3D map point, so that prediction accuracy can be improved, and then a data amount of the residual data obtained through prediction is further reduced.

In a possible implementation, the method further includes: predicting attribute information of the current 3D map point other than the spatial location based on a location of the current 3D map point in the re-sorted sequence, to obtain a bitstream.

In a possible implementation, the bitstream further includes indication information of the reference 3D map point. For example, the indication information of the reference 3D map point may include a map point identifier or the like.

According to a second aspect, this application provides a 3D map decoding method, including: decoding a bitstream to obtain residual data of a spatial location of a current 3D map point; and obtaining the spatial location of the current 3D map point based on the residual data of the spatial location of the current 3D map point and a spatial location of a reference 3D map point, where the current 3D map point and the reference 3D map point belong to a 3D map, the reference 3D map point is a 3D map point that has been decoded before the current 3D map point is decoded, the 3D map includes a plurality of 3D map points, and the 3D map point includes a spatial location.

In the decoding method, the received bitstream is a bitstream of the residual data of the spatial location of the current 3D map point, and a data amount of the residual data is relatively small, so that bandwidth usage during transmission of the 3D map to a decoding apparatus can be reduced, and transmission efficiency of the 3D map can be improved.

In a possible implementation, the obtaining the spatial location of the current 3D map point based on the residual data of the spatial location of the current 3D map point and a spatial location of a reference 3D map point includes: obtaining a predicted value of the spatial location of the current 3D map point based on the spatial location of the reference 3D map point; and adding the residual data of the spatial location of the current 3D map point to the obtained predicted value of the spatial location of the current 3D map point to obtain the spatial location of the current 3D map point.

In a possible implementation, before the obtaining the spatial location of the current 3D map point based on the residual data of the spatial location of the current 3D map point and a spatial location of a reference 3D map point, the method further includes: determining the reference 3D map point. The reference 3D map point determined by the decoding apparatus needs to be consistent with a reference 3D map point determined by an encoding apparatus.

In a possible implementation, when the plurality of 3D map points are sorted in a sequence, the determining the reference 3D map point includes: determining a first 3D map point as the reference 3D map point, where the first 3D map point is a previous decoded 3D map point of the current 3D map point.

In a possible implementation, when the plurality of 3D map points are sorted in a sequence, the determining the reference 3D map point includes: determining both a first 3D map point and a second 3D map point as the reference 3D map point, where the first 3D map point is a previous decoded 3D map point of the current 3D map point, and the second 3D map point is a previous decoded 3D map point of the first 3D map point.

In a possible implementation, when the plurality of 3D map points are sorted in a topology tree, the determining the reference 3D map point includes: determining a third 3D map point as the reference 3D map point, where the third 3D map point is a parent-node 3D map point of the current 3D map point.

In a possible implementation, when the plurality of 3D map points are sorted in a topology tree, the determining the reference 3D map point includes: determining both a third 3D map point and a fourth 3D map point as the reference 3D map point, where the third 3D map point is a parent-node 3D map point of the current 3D map point, and the fourth 3D map point is a parent-node 3D map point of the third 3D map point.

In a possible implementation, when the plurality of 3D map points are sorted in a sequence, the determining the reference 3D map point includes: determining the reference 3D map point based on indication information in the bitstream.

In a possible implementation, the method further includes: obtaining attribute information of the current 3D map point other than the spatial location.

According to a third aspect, this application provides a 3D map encoding apparatus, including: a prediction module, configured to predict a spatial location of a current 3D map point based on a spatial location of a reference 3D map point to obtain residual data of the spatial location of the current 3D map point, where the current 3D map point and the reference 3D map point belong to a 3D map, the reference 3D map point is a 3D map point that has been encoded before the current 3D map point is encoded, the 3D map includes a plurality of 3D map points, and the 3D map point includes a spatial location; and an encapsulation module, configured to encode the residual data of the spatial location of the current 3D map point to obtain a bitstream.

A data amount of the residual data obtained by the encoding apparatus is relatively small. When the encoding apparatus stores the bitstream, storage space for storing the 3D map by the encoding apparatus can be reduced. When the encoding apparatus sends the bitstream, bandwidth usage during transmission of the 3D map can be reduced, and transmission efficiency of the 3D map can be improved.

In a possible implementation, the prediction module is further configured to determine the reference 3D map point.

In a possible implementation, the prediction module is further configured to sort the plurality of 3D map points to obtain a re-sorted sequence of the plurality of 3D map points.

In a possible implementation, the re-sorted sequence is represented by a sequence, and two adjacent 3D map points in the sequence are associated based on a distance.

In a possible implementation, the prediction module is specifically configured to: add, to the sequence, a 3D map point that is in at least one 3D map point not added to the sequence and that is closest to a previous 3D map point added to the sequence, and arrange the 3D map point after the previous 3D map point added to the sequence, where the plurality of 3D map points include the at least one 3D map point not added to the sequence.

In a possible implementation, the prediction module is specifically configured to determine a first 3D map point as the reference 3D map point, where the first 3D map point is a previous 3D map point of the current 3D map point in the sequence.

In a possible implementation, the prediction module is specifically configured to determine both a first 3D map point and a second 3D map point as the reference 3D map point, where the first 3D map point is a previous 3D map point of the current 3D map point in the sequence, and the second 3D map point is a previous 3D map point of the first 3D map point in the sequence.

In a possible implementation, the re-sorted sequence is represented by a topology tree, and in the topology tree, a 3D map point located at a parent node and a 3D map point located at a child node are associated based on a distance.

In a possible implementation, the prediction module is specifically configured to: add, to the topology tree, a 3D map point that is in at least one 3D map point not added to the topology tree and that is closest to at least one 3D map point that has been added to the topology tree, and arrange the 3D map point at a child-node location of a closest 3D map point in the at least one 3D map point that has been added to the topology tree, where the plurality of 3D map points include the at least one 3D map point not added to the topology tree.

In a possible implementation, the prediction module is specifically configured to determine a third 3D map point as the reference 3D map point, where the third 3D map point is a 3D map point at a parent-node location of the current 3D map point in the topology tree.

In a possible implementation, the prediction module is specifically configured to determine both a third 3D map point and a fourth 3D map point as the reference 3D map point, where the third 3D map point is a 3D map point at a parent-node location of the current 3D map point in the topology tree, and the fourth 3D map point is a 3D map point at a parent-node location of the third 3D map point in the topology tree.

In a possible implementation, the prediction module is further configured to predict attribute information of the current 3D map point other than the spatial location based on a location of the current 3D map point in the re-sorted sequence, to obtain a bitstream.

In a possible implementation, the bitstream further includes indication information of the reference 3D map point.

According to a fourth aspect, this application provides a 3D map decoding apparatus, including: a decapsulation module, configured to decode a bitstream to obtain residual data of a spatial location of a current 3D map point; and a prediction module, configured to obtain the spatial location of the current 3D map point based on the residual data of the spatial location of the current 3D map point and a spatial location of a reference 3D map point, where the current 3D map point and the reference 3D map point belong to a 3D map, the reference 3D map point is a 3D map point that has been decoded before the current 3D map point is decoded, the 3D map includes a plurality of 3D map points, and the 3D map point includes a spatial location.

The bitstream received by the decoding apparatus is a bitstream of the residual data of the spatial location of the current 3D map point, and a data amount of the residual data is relatively small, so that bandwidth usage during transmission of the 3D map to the decoding apparatus can be reduced, and transmission efficiency of the 3D map can be improved.

In a possible implementation, the prediction apparatus is specifically configured to: obtain a predicted value of the spatial location of the current 3D map point based on the spatial location of the reference 3D map point; and add the residual data of the spatial location of the current 3D map point to the obtained predicted value of the spatial location of the current 3D map point to obtain the spatial location of the current 3D map point.

In a possible implementation, the prediction module is further configured to determine the reference 3D map point.

In a possible implementation, when the plurality of 3D map points are sorted in a sequence, the prediction module is specifically configured to determine a first 3D map point as the reference 3D map point, where the first 3D map point is a previous decoded 3D map point of the current 3D map point.

In a possible implementation, when the plurality of 3D map points are sorted in a sequence, the prediction module is specifically configured to determine both a first 3D map point and a second 3D map point as the reference 3D map point, where the first 3D map point is a previous decoded 3D map point of the current 3D map point, and the second 3D map point is a previous decoded 3D map point of the first 3D map point.

In a possible implementation, when the plurality of 3D map points are sorted in a topology tree, the prediction module is specifically configured to determine a third 3D map point as the reference 3D map point, where the third 3D map point is a parent-node 3D map point of the current 3D map point.

In a possible implementation, when the plurality of 3D map points are sorted in a topology tree, the prediction module is specifically configured to determine both a third 3D map point and a fourth 3D map point as the reference 3D map point, where the third 3D map point is a parent-node 3D map point of the current 3D map point, and the fourth 3D map point is a parent-node 3D map point of the third 3D map point.

In a possible implementation, when the plurality of 3D map points are sorted in a sequence, the prediction module is specifically configured to determine the reference 3D map point based on indication information in the bitstream.

In a possible implementation, the prediction module is further configured to obtain attribute information of the current 3D map point other than the spatial location.

According to a fifth aspect, this application provides a 3D map encoding device, including: one or more processors; and a memory, configured to store one or more programs. When the one or more programs are executed by the one or more processors, the one or more processors are enabled to implement the method according to any one of the implementations of the first aspect.

According to a sixth aspect, this application provides a 3D map decoding device, including: one or more processors; and a memory, configured to store one or more programs. When the one or more programs are executed by the one or more processors, the one or more processors are enabled to implement the method according to any one of the implementations of the second aspect.

According to a seventh aspect, this application provides a computer-readable storage medium, including a computer program. When the computer program is executed on a computer, the computer is enabled to perform the method according to either of the first aspect and the second aspect.

According to an eighth aspect, this application provides a computer program product. The computer program product includes computer program code, and when the computer program code is run on a computer, the computer is enabled to perform the method according to either of the first aspect and the second aspect.

According to a ninth aspect, this application provides an encoded 3D map bitstream. The encoded 3D map bitstream includes residual data of a spatial location of a current 3D map point, the residual data of the spatial location of the current 3D map point is obtained by predicting the spatial location of the current 3D map point by using a spatial location of a reference 3D map point, the current 3D map point and the reference 3D map point belong to a 3D map, the reference 3D map point is a 3D map point that has been encoded before the current 3D map point is encoded, the 3D map includes a plurality of 3D map points, and the 3D map point includes a spatial location.

In a possible implementation, the reference 3D map point is selected from the plurality of 3D map points that are sorted.

In a possible implementation, the plurality of 3D map points are sorted based on a sequence, and two adjacent 3D map points in the sequence are associated based on a distance. The sorting based on the sequence includes: adding, to the sequence, a 3D map point that is in at least one 3D map point not added to the sequence and that is closest to a previous 3D map point added to the sequence, and arranging the 3D map point after the previous 3D map point added to the sequence, where the plurality of 3D map points include the at least one 3D map point not added to the sequence.

In a possible implementation, the reference 3D map point includes a first 3D map point, and the first 3D map point is a previous 3D map point of the current 3D map point in the sequence.

In a possible implementation, the reference 3D map point includes a first 3D map point and a second 3D map point, the first 3D map point is a previous 3D map point of the current 3D map point in the sequence, and the second 3D map point is a previous 3D map point of the first 3D map point in the sequence.

In a possible implementation, the plurality of 3D map points are sorted based on a topology tree, and in the topology tree, a 3D map point located at a parent node and a 3D map point located at a child node are associated based on a distance. The sorting based on the topology tree includes: adding, to the topology tree, a 3D map point that is in at least one 3D map point not added to the topology tree and that is closest to at least one 3D map point that has been added to the topology tree, and arranging the 3D map point at a child-node location of a closest 3D map point in the at least one 3D map point that has been added to the topology tree, where the plurality of 3D map points include the at least one 3D map point not added to the topology tree.

In a possible implementation, the reference 3D map point includes a third 3D map point, and the third 3D map point is a 3D map point at a parent-node location of the current 3D map point in the topology tree.

In a possible implementation, the reference 3D map point includes a third 3D map point and a fourth 3D map point, the third 3D map point is a 3D map point at a parent-node location of the current 3D map point in the topology tree, and the fourth 3D map point is a 3D map point at a parent-node location of the third 3D map point in the topology tree.

## BRIEF DESCRIPTION OF DRAWINGS

FIG. 1 is a schematic diagram of an application architecture according to an embodiment of this application;

FIG. 2 is a schematic diagram of a structure of an electronic device 20 according to an embodiment of this application;

FIG. 3 is a schematic diagram of a structure of a server 30 according to an embodiment of this application;

FIG. 4a is a schematic diagram of an application scenario according to an embodiment of this application;

FIG. 4b is a schematic diagram of an application scenario according to an embodiment of this application;

FIG. 4c is a schematic diagram of an application scenario according to an embodiment of this application;

FIG. 4d is a schematic diagram of an application scenario according to an embodiment of this application;

FIG. 4e is a schematic diagram of an application scenario according to an embodiment of this application;

FIG. 4f is a schematic diagram of an application scenario according to an embodiment of this application;

FIG. 4g is a schematic diagram of a user interface displayed by an electronic device according to an embodiment of this application;

FIG. 5 is a flowchart of a process 500 of a 3D map encoding method according to an embodiment of this application;

FIG. 6 is a schematic diagram of a sorting result according to an embodiment of this application;

FIG. 7 is a schematic diagram of a sorting result according to an embodiment of this application;

FIG. 8 is a flowchart of a process 800 of a 3D map decoding method according to an embodiment of this application;

FIG. 9 is a diagram of a structure of a 3D map encoding apparatus 90 according to an embodiment of this application; and

FIG. 10 is a diagram of a structure of a 3D map decoding apparatus 100 according to an embodiment of this application.

## DESCRIPTION OF EMBODIMENTS

To make objectives, technical solutions, and advantages of this application clearer, the following clearly and completely describes the technical solutions in this application with reference to the accompanying drawings in this application. It is clear that the described embodiments are some rather than all of embodiments of this application. Based on embodiments of this application, all other embodiments obtained by a person of ordinary skill in the art without creative efforts fall within the protection scope of this application.

In embodiments of the specification, claims, and accompanying drawings of this application, the terms "first", "second", and the like are merely intended for distinguishing and description, but shall not be understood as an indication or implication of relative importance or an indication or implication of an order. In addition, the terms "include", "have", and any variant thereof are intended to cover non-exclusive inclusion, for example, inclusion of a series of steps or units. A method, a system, a product, or a device is not necessarily limited to clearly listed steps or units, but may include other steps or units that are not clearly listed or that are inherent to the process, the method, the product, or the device.

It should be understood that, in this application, "at least one (item)" refers to one or more, and "a plurality of" refers to two or more. The term "and/or" describes an association relationship of associated objects, and indicates that three relationships may exist. For example, "A and/or B" may indicate the following three cases: Only A exists, only B exists, and both A and B exist. A and B may be singular or plural. The character "/" generally indicates an "or" relationship between associated objects. "At least one of the following items (pieces)" or a similar expression thereof refers to any combination of these items, including a single item (piece) or any combination of a plurality of items (pieces). For example, at least one of a, b, or c may represent a, b, c, "a and b", "a and c", "b and c", or "a, b, and c", where a, b, and c may be singular or plural.

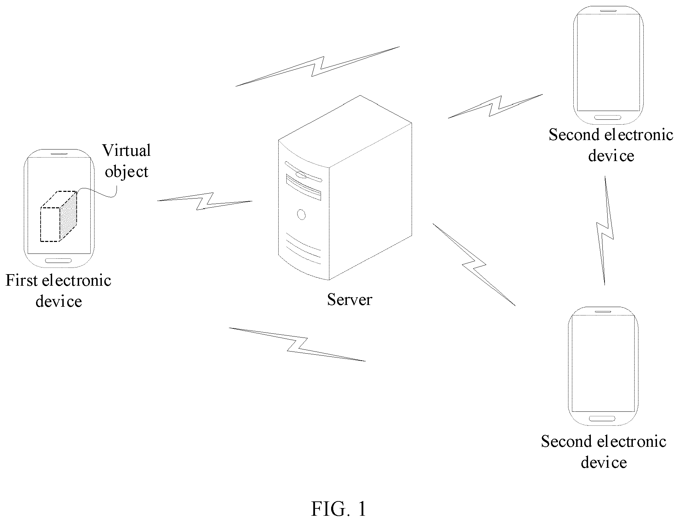

FIG. 1 is a schematic diagram of an application architecture according to an embodiment of this application. As shown in FIG. 1, the application architecture includes a plurality of electronic devices and a server. The plurality of electronic devices may include a first electronic device and one or more second electronic devices (two second electronic devices are used as an example in FIG. 1). The one or more second electronic devices are several electronic devices other than the first electronic device. The plurality of electronic devices can communicate with the server, and the plurality of electronic devices can communicate with each other. For example, any device in the application architecture can communicate with another device in a manner like wireless fidelity (wireless-fidelity, Wi-Fi) communication, Bluetooth communication, or cellular 2/3/4/5 generation (2/3/4/5 generation, 2G/3G/4G/5G) communication. It should be understood that another communication manner, including a future communication manner, may alternatively be used between the server and the electronic device. This is not specifically limited herein. It should be noted that the "one or more second electronic devices" in this embodiment of this application are merely used to represent electronic devices other than the first electronic device, but do not limit whether types of the plurality of electronic devices are the same.

The electronic device may be various types of devices configured with a camera and a display component. For example, the electronic device may be a terminal device like a mobile phone, a tablet computer, a notebook computer, or a video recorder (an example in which the electronic device is a mobile phone is used in FIG. 1). Alternatively, the electronic device may be a device used for virtual scene interaction, including VR glasses, an AR device, an MR interaction device, or the like. Alternatively, the electronic device may be a wearable electronic device like a smartwatch or a smart band. Alternatively, the electronic device may be a device mounted on a vehicle like an automobile, a driverless vehicle, an uncrewed aerial vehicle, or an industrial robot. A specific form of the electronic device is not specially limited in embodiments of this application.

In addition, the electronic device may also be referred to as user equipment (user equipment, UE), a subscriber station, a mobile unit, a subscriber unit, a wireless unit, a remote unit, a mobile device, a wireless device, a wireless communication device, a remote device, a mobile subscriber station, a terminal device, an access terminal, a mobile terminal, a wireless terminal, a smart terminal, a remote terminal, a handheld terminal, a user agent, a mobile client, a client, or another appropriate term.

The server may be one or more physical servers (one physical server is used as an example in FIG. 1), or may be a computer cluster, or may be a virtual machine or a cloud server in a cloud computing scenario, or the like.

In embodiments of this application, a virtual scene application (application, APP) like a VR application, an AR application, or an MR application may be installed on the electronic device, and the VR application, the AR application, or the MR application may be run based on a user operation (for example, tap, touch, slide, shake, or voice control). The electronic device may capture visual information of any object in an environment by using a sensor, and then display a virtual object on the display component based on the captured visual information. The virtual object may be a virtual object in a VR scene, an AR scene, or an MR scene (that is, an object in a virtual environment).

In embodiments of this application, the electronic device may install a navigation application, a detection application, or a control application, and run a corresponding application based on a user operation or a preset program. The electronic device may perform application like path planning, object detection, and vehicle control based on a pose and other status information of the electronic device in a current environment.

The visual information in embodiments of this application includes but is not limited to an image video (without depth information) captured by the camera, an image video that has depth information and that is captured by a depth sensor (depth sensor), data collected by a lidar (LiDAR), and data collected by a millimeter-wave radar (RaDAR).

It should be noted that, in embodiments of this application, the virtual scene application in the electronic device may be an application built in the electronic device, or may be an application that is provided by a third-party service provider and that is installed by a user. This is not specifically limited herein.

In embodiments of this application, a simultaneous localization and mapping (simultaneous localization and mapping, SLAM) system may be further configured for the electronic device. The SLAM system can create a map in a completely unknown environment, and use the map to perform positioning, pose (location and posture) determining, navigation, and the like. In embodiments of this application, the map created by the SLAM system is referred to as a SLAM map. The SLAM map may be understood as a map drawn by the SLAM system based on environment information collected by a collection device. The collection device may include a visual information collection apparatus and an inertia measurement unit (inertial measurement unit, IMU) in the electronic device. The visual information collection apparatus may include, for example, a camera, a lens, a depth camera, a lidar, or a millimeter-wave radar. The IMU may include, for example, a sensor like a gyroscope or an accelerometer.

In embodiments of this application, the SLAM map is also referred to as a 3D map. It should be noted that the 3D map includes but is not limited to the SLAM map, and may alternatively include a three-dimensional map created by using another technology. This is not specifically limited in embodiments of this application.

In a possible implementation, the 3D map may include a plurality of 3D map points, and correspondingly, data of the 3D map may include data of the plurality of 3D map points. The 3D map point is a point that attracts interest or has a significant feature in an environment.

A possible manner of obtaining the 3D map point is: performing photographing by using a plurality of types of devices such as a lidar, air photography (oblique photography) in a field of view of an uncrewed aerial vehicle, a high-definition panoramic camera, and a high-definition industrial camera; and extracting, according to methods such as features from accelerated segment test (features from accelerated segment test, FAST) and rotated binary robust independent elementary features (binary robust independent elementary features, BRIEF) descriptor oriented features (oriented FAST and rotated BRIEF, ORB), scale invariant feature transform (scale invariant feature transform, SIFT), speeded-up robust feature (speeded-up robust feature, SURF), BRIEF, binary robust invariant scalable keypoints (binary robust invariant scalable keypoints, BRISK), fast retina keypoint (fast retina keypoint, FREAK), and repeatable and reliable detector and descriptor (repeatable and reliable detector and descriptor, R2D2), the 3D map point from data captured by the devices.

The data of the 3D map point may include the following:

(1) 3D map point descriptor

The 3D map point descriptor is a vector, used to represent a local feature of the 3D map point. In a visual positioning algorithm, the 3D map point descriptor is used to perform matching between 3D map points. A possible method is to calculate a distance (which may be a Euclidean distance, an inner product distance, a Hamming distance, or the like) between two 3D map point descriptors. When the distance is less than a threshold, it is considered that two 3D map points match.

(2) 3D map point spatial location

The 3D map point spatial location may be represented by X, Y, and Z on three-dimensional spatial axes, or may be represented by a longitude and a latitude or an altitude, or may be represented by polar coordinates, or the like. A method for representing the 3D map point spatial location is not specifically limited in embodiments of this application. The 3D map point spatial location may be an absolute location of the 3D map point, or may be a relative location of the 3D map point. For example, a central location of an entire area is used as an origin, and all 3D map point spatial locations are offset locations relative to a spatial location of the origin.

In embodiments of this application, a number may be allocated to each 3D map point and written into the data of the 3D map, or a storage order of a plurality of 3D map points in memory may be used to implicitly indicate a number of a 3D map point. It should be noted that an order of the plurality of 3D map points included in the 3D map is meaningless. Therefore, the foregoing number may be considered as an identifier for identifying the 3D map point, to distinguish between the 3D map points. However, the number is not used to limit the order of the plurality of 3D map points. For example, the 3D map includes three 3D map points whose numbers are 1, 2, and 3, and the three 3D map points may be processed in an order of 1→2→3, an order of 3→2→1, an order of 2→1→3, or the like.

In a possible implementation, the data of the 3D map further includes a plurality of area descriptors. Any one of the plurality of area descriptors is used to describe features of some or all of the plurality of 3D map points. In other words, for any one of the plurality of area descriptors, the area descriptor may be used to describe features of some or all of the plurality of 3D map points. In this case, the area descriptor and the 3D map points are in a one-to-many relationship. A feature of each of the plurality of 3D map points may be described by some or all of the plurality of area descriptors. In this case, the 3D map point and the area descriptors are in a one-to-many relationship. It can be learned that the plurality of area descriptors and the plurality of 3D map points are in a many-to-many relationship. An area descriptor generation method includes but is not limited to a conventional method like bag of words (bag of words, BOW) or vector of locally aggregated descriptor (vector of aggregate locally descriptor, VLAD), and a new method based on NetVLAD or artificial intelligence (artificial intelligence, AI). Similarly, the plurality of area descriptors may also be identified by using numbers, to distinguish between the plurality of area descriptors. However, the numbers are not used to limit an order of the plurality of area descriptors.

In a possible implementation, the data of the 3D map further includes a correspondence between a 3D map point and an area descriptor. The correspondence clearly describes a specific 3D map point corresponding to any area descriptor and a specific area descriptor corresponding to any 3D map point.

Optionally, the correspondence may be explicitly described by using a correspondence table between a number of an area descriptor and a number of a 3D map point. For example, the 3D map includes three area descriptors whose numbers are T1 to T3, and six 3D map points whose numbers are P1 to P6, and the correspondence table is shown in Table 1 or Table 2.

**Table 1**

| Number of an area descriptor | Number of a 3D map point |
|---|---|
| T1 | P1 |
| | P2 |
| | P3 |
| T2 | P2 |
| | P3 |
| T3 | P3 |
| | P4 |
| | P5 |
| | P6 |

It should be noted that Table 1 is an example of the correspondence table between a number of an area descriptor and a number of a 3D map point. The correspondence table may alternatively be presented in another format or manner. This is not specifically limited in this application.

Optionally, the correspondence may alternatively be implicitly described by using storage locations of an area descriptor and a 3D map point. For example, T1 is first stored in the memory, then data of P1, P2, and P3 is stored, then T2 is stored, then data of P2 and P3 is stored, finally T3 is stored, and then data of P3, P4, P5, and P6 is stored.

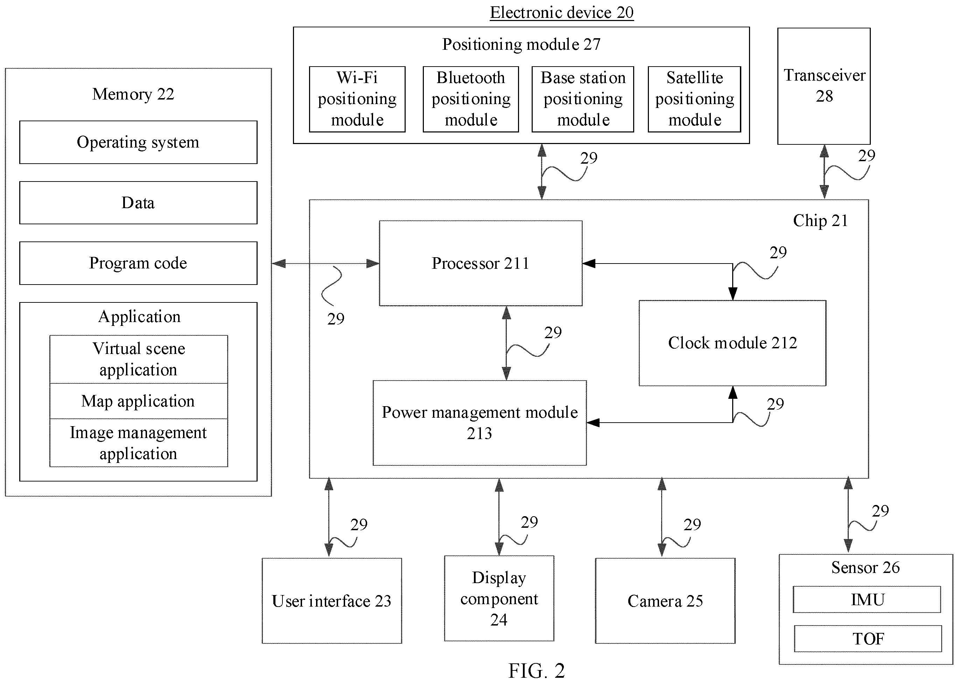

FIG. 2 is a schematic diagram of a structure of an electronic device 20 according to an embodiment of this application. As shown in FIG. 2, the electronic device 20 may be at least one of the first electronic device and the one or more second electronic devices in the embodiment shown in FIG. 1. It should be understood that the structure shown in FIG. 2 does not constitute a specific limitation on the electronic device 20. In some other embodiments of this application, the electronic device 20 may include more or fewer components than the structure shown in FIG. 2, or combine some components, or split some components, or have different component arrangements. The components shown in FIG. 2 may be implemented in hardware including one or more signal processing and/or application-specific integrated circuits, software, or a combination of hardware and software.

The electronic device 20 may include a chip 21, a memory 22 (one or more computer-readable storage media), a user interface 23, a display component 24, a camera 25, a sensor 26, a positioning module 27 configured to perform device positioning, and a transceiver 28 configured to perform communication. These components may communicate with each other by using one or more buses 29.

The chip 21 may include one or more processors 211, a clock module 212, and a power management module 213 in an integrated manner. The clock module 212 integrated in the chip 21 is mainly configured to provide the processor 211 with a timer required for data transmission and time sequence control. The timer may implement clock functions of data transmission and time sequence control. The processor 211 may perform operation based on instruction operation code and a time sequence signal, to generate an operation control signal, so as to complete control of instruction fetching and instruction execution. The power management module 213 integrated in the chip 21 is mainly configured to provide a stable and high-precision voltage for the chip 21 and another component of the electronic device 20.

The processor 211 may also be referred to as a central processing unit (central processing unit, CPU). The processor 211 may specifically include one or more processing units. For example, the processor 211 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

In a possible implementation, the processor 211 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The memory 22 may be connected to the processor 211 through the bus 29, or may be coupled to the processor 311, and is configured to store various software programs and/or a plurality of groups of instructions. The memory 22 may include a high-speed random access memory (for example, a cache), and may also include a nonvolatile memory, for example, one or more magnetic disk storage devices, a flash memory device, or another nonvolatile solid-state storage device. The memory 22 may store an operating system, for example, an embedded operating system like Android (Android), an Apple mobile platform (iOS), a Microsoft windows operating system (Windows), or a UNIX-like operating system (Linux). The memory 22 may further store data, for example, image data, point cloud data, 3D map data, pose data, coordinate system conversion information, and map update information. The memory 22 may further store computer-executable program code. The computer-executable program code includes instructions, for example, a communication program instruction, or a related program instruction of a SLAM system. The memory 22 may further store one or more applications, for example, a virtual scene application of AR/VR/MR, a 3D map application, an image management application, and a navigation and control application. The memory 22 may further store a user interface program. The user interface program may vividly display content of an application, for example, a virtual object in a virtual scene like AR/VR/MR, by using a graphical operation interface, present the content by using the display component 24, and receive a control operation of a user on the application by using an input control like a menu, a dialog box, and a button.

The user interface 23 may be, for example, a touch panel. The touch panel may detect an operation instruction of the user on the touch panel. The user interface 23 may alternatively be, for example, a keypad, a physical button, or a mouse.

The electronic device 20 may include one or more display components 24. The electronic device 20 may implement a display function by jointly using the display component 24, the graphics processing unit (GPU) and the application processor (AP) in the chip 21, and the like. The GPU is a microprocessor for implementing image processing, and is connected to the display component 24 and the application processor. The GPU performs mathematical and geometric calculation for graphic rendering. The display component 24 may display interface content output by the electronic device 20, for example, display an image, a video, and the like in a virtual scene like AR/VR/MR. The interface content may include an interface of a running application, a system-level menu, and the like, and may specifically include the following interface elements: an input interface element like a button (Button), a text input box (Text), a scroll bar (Scroll Bar), or a menu (Menu); and an output interface element like a window (Window), a label (Label), an image, a video, or an animation.

The display component 24 may be a display panel, a lens (for example, VR glasses), a projection screen, or the like. The display panel may also be referred to as a display, for example, may be a touchscreen, a flexible display, a curved display, or the like, or may be another optical component. It should be understood that the display of the electronic device in embodiments of this application may be a touchscreen, a flexible display, a curved display, or a screen in another form. In other words, the display of the electronic device has a function of displaying an image, and neither of a specific material and a shape of the display is specifically limited.

For example, when the display component 24 includes a display panel, the display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diodes, QLED), or the like. In addition, in a possible implementation, the touch panel in the user interface 23 may be coupled to the display panel in the display component 24. For example, the touch panel may be disposed below the display panel. The touch panel is configured to detect touch pressure that acts on the display panel when the user enters a touch operation (for example, tap, slide, or touch) by using the display panel, and the display panel is configured to display content.

The camera 25 may be a monocular camera, a binocular camera, or a depth camera, and is configured to photograph/record an environment to obtain an image/a video image. The image/video image captured by the camera 25 may be, for example, used as input data of the SLAM system, or the image/video may be displayed by using the display component 24.

In a possible implementation, the camera 25 may also be considered as a sensor. The image captured by the camera 25 may be in an IMG format, or may be in another format type. This is not specifically limited in embodiments of this application.

The sensor 26 may be configured to collect data related to a status change (for example, rotation, swing, movement, or jitter) of the electronic device 20. The data collected by the sensor 26 may be used as input data of the SLAM system. The sensor 26 may include one or more types of sensors, for example, an inertia measurement unit (inertial measurement unit, IMU) and a time of flight (time of flight, TOF) sensor. The IMU may include a sensor like a gyroscope or an accelerometer. The gyroscope is configured to measure an angular velocity of the electronic device during motion, and the accelerometer is configured to measure acceleration of the electronic device during motion. The TOF sensor may include an optical transmitter and an optical receiver. The optical transmitter is configured to emit light, for example, a laser, an infrared ray, or a radar wave. The optical receiver is configured to detect reflected light, for example, a reflected laser, a reflected infrared ray, or a reflected radar wave.

It should be noted that the sensor 26 may further include more other sensors, such as an inertial sensor, a barometer, a magnetometer, and a wheel speedometer. This is not specifically limited in embodiments of this application.

The positioning module 27 is configured to implement physical positioning of the electronic device 20, for example, configured to obtain an initial location of the electronic device 20. The positioning module 27 may include one or more of a Wi-Fi positioning module, a Bluetooth positioning module, a base station positioning module, and a satellite positioning module. A global navigation satellite system (global navigation satellite system, GNSS) may be disposed in the satellite positioning module to assist positioning. The GNSS is not limited to a BeiDou system, a global positioning system (global positioning system, GPS), a GLONASS (global navigation satellite system, GLONASS), or a Galileo (Galileo) satellite navigation system.

The transceiver 28 is configured to implement communication between the electronic device 20 and another device (for example, a server or another electronic device). The transceiver 28 integrates a transmitter and a receiver, which are respectively configured to send and receive radio frequency signals. In specific implementation, the transceiver 28 includes but is not limited to an antenna system, a radio frequency (radio frequency, RF) transceiver, one or more amplifiers, a tuner, one or more oscillators, a digital signal processor, a codec (CODEC) chip, a subscriber identification module (subscriber identification module, SIM) card, a storage medium, and the like. In a possible implementation, the transceiver 28 may alternatively be implemented on a separate chip. The transceiver 28 supports at least one type of data network communication in 2G/3G/4G/5G and the like, and/or supports at least one of the following short-range wireless communication manners: Bluetooth (Bluetooth, BT) communication, wireless fidelity (wireless fidelity, Wi-Fi) communication, near field communication (near field communication, NFC), infrared (infrared, IR) wireless communication, ultra-wideband (ultra wide band, UWB) communication, and ZigBee (ZigBee) communication.

In embodiments of this application, the processor 211 runs the program code stored in the memory 22, to perform various function applications and data processing of the electronic device 20.

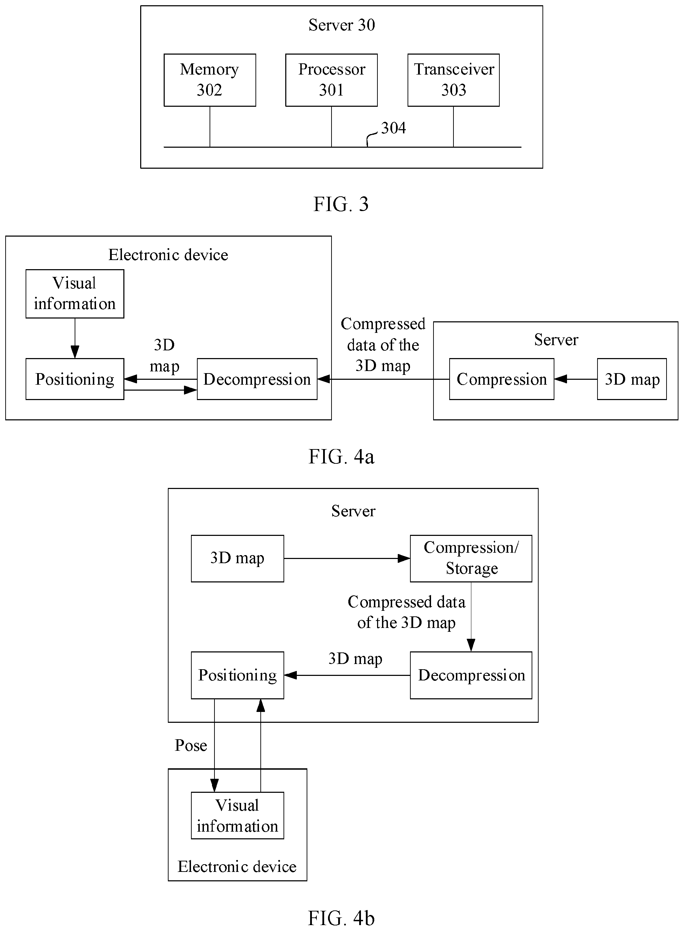

FIG. 3 is a schematic diagram of a structure of a server 30 according to an embodiment of this application. As shown in FIG. 3, the server 30 may be the server in the embodiment shown in FIG. 1. The server 30 includes a processor 301, a memory 302 (one or more computer-readable storage media), and a transceiver 303. These components may communicate with each other by using one or more buses 304.

The processor 301 may be one or more CPUs. When the processor 301 is one CPU, the CPU may be a single-core CPU, or may be a multi-core CPU.

The memory 302 may be connected to the processor 301 by using the bus 304, or may be coupled to the processor 301, and is configured to store various types of program code and/or a plurality of groups of instructions, and data (for example, map data or pose data). In specific implementation, the memory 302 includes but is not limited to a random access memory (Random Access Memory, RAM), a read-only memory (Read-Only Memory, ROM), an erasable programmable read-only memory (Erasable Programmable Read-Only Memory, EPROM), or a compact disc read-only memory (Compact Disc Read-Only Memory, CD-ROM).

The transceiver 303 mainly integrates a receiver and a transmitter. The receiver is configured to receive data (for example, a request or an image) sent by an electronic device, and the transmitter is configured to send data (for example, map data or pose data) to an electronic device.

It should be understood that the server 30 shown in FIG. 3 is merely an example provided in embodiments of this application, and the server 30 may further have more components than those shown in the figure. This is not specifically limited in embodiments of this application.

In embodiments of this application, the processor 301 runs the program code stored in the memory 302, to perform various function applications and data processing of the server 30.

The term "coupling" used in embodiments of this application means a direct connection or a connection using one or more intermediate components or circuits.

FIG. 4a is a schematic diagram of an application scenario according to an embodiment of this application. As shown in FIG. 4a, in the application scenario, an electronic device captures visual information by using a sensor, and determines a current pose of the electronic device based on the visual information and a 3D map from a server.

The 3D map is provided by the server. To be specific, the server creates the 3D map, then compresses the 3D map, and transmits compressed data of the 3D map to the electronic device. After receiving the compressed data of the 3D map, the electronic device performs decompression to obtain reconstructed data of the 3D map, and determines the current pose of the electronic device based on the captured visual information and the 3D map. The pose is location information of the electronic device, and may be an absolute pose in a world coordinate system, or may be a relative pose relative to a point in an environment.

In this embodiment of this application, the server may create the 3D map in advance, compress the 3D map, and then locally store the compressed 3D map. In this way, storage space can be saved. In addition, the server may also transmit the compressed data of the 3D map to another device, for example, a cloud memory.

1. The server creates the 3D map, compresses the 3D map to obtain the compressed data of the 3D map, and locally stores the compressed data.
The server compresses the 3D map to save local storage space.
2. The electronic device sends a map download request to the server. There are two manners for triggering the map download request.

(1) A user starts a 3D map application installed on the electronic device, and the application uploads, to a server corresponding to the application, location information obtained based on GPS positioning or Wi-Fi positioning. This upload operation may trigger a map download request. Because uploaded content includes the location information, the server may perform preliminary estimation based on the location information, and transmit, to the electronic device, compressed data of a 3D map of an area to which a positioning point indicated by the location information belongs. A range of the area to which the positioning point indicated by the location information belongs may be preset. For example, the area may be an administrative region (including a county, a city, a country, or an administrative region) at each level in which the positioning point is located, or may be a circular area with the positioning point as a center and a specified distance as a radius.
(2) A user starts a 3D map application installed on the electronic device, and actively enters or selects an area on the application. For example, the user actively enters "xx business center", or selects "street A" from a list "street A, street B, street C". The foregoing operation of the user may trigger a map download request. Regardless of whether the user enters or selects a geographical location, the server transmits compressed data of a 3D map of the geographical location to the electronic device.

It should be understood that, in this embodiment of this application, in addition to the foregoing two manners, the map download request may alternatively be triggered in another manner. For example, the electronic device automatically detects whether a condition for downloading a 3D map or starting to download a 3D map is met, or the electronic device starts to download a 3D map by detecting an ambient light change or an environment change, to request to download a 3D map within an area range from the server. A size of the area range is not specifically limited.

3. The server sends the compressed data of the 3D map to the electronic device.

4. The electronic device captures the visual information.

It should be noted that step 3 and step 4 are independent of each other, and an order is not limited.

5. The electronic device decompresses the compressed data of the 3D map to obtain the reconstructed data of the 3D map.

6. The electronic device performs positioning on the 3D map based on the visual information, to obtain a pose corresponding to the visual information.

After receiving the compressed data of the 3D map, the electronic device does not need to immediately decompress the compressed data, but needs only to obtain the reconstructed data of the 3D map through decompression before performing positioning based on the visual information. For example, the user may pre-download compressed data of a 3D map within an area range by downloading an "offline map", and decompress the compressed data of the 3D map only when positioning is required.

FIG. 4b is a schematic diagram of an application scenario according to an embodiment of this application. As shown in FIG. 4b, in the application scenario, an electronic device captures visual information by using a sensor, and a server determines a current pose of the electronic device based on the visual information from the electronic device and a 3D map.

The 3D map is provided by the server. To be specific, the server creates the 3D map, then compresses the 3D map, and locally stores compressed data of the 3D map. When receiving the visual information from the electronic device, the server performs decompression to obtain reconstructed data of the 3D map, and determines the current pose of the electronic device based on the visual information and the 3D map.

1. The server creates the 3D map, compresses the 3D map to obtain the compressed data of the 3D map, and locally stores the compressed data.

2. The electronic device captures the visual information.

3. The electronic device sends the visual information to the server.

4. The server decompresses the compressed data of the 3D map to obtain the reconstructed data of the 3D map.

It should be understood that the server compresses the 3D map to save storage space.

5. The server performs positioning on the 3D map based on the visual information, to obtain a pose corresponding to the visual information.

6. The server sends the pose to the electronic device.

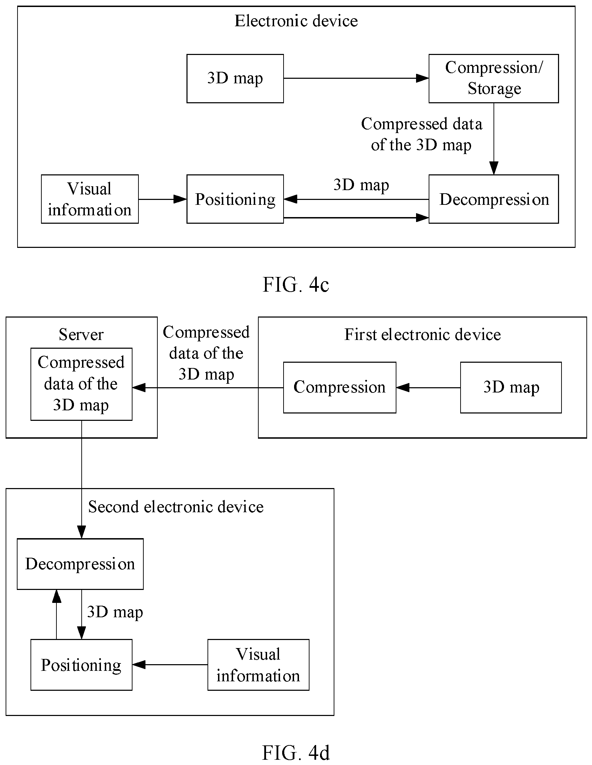

FIG. 4c is a schematic diagram of an application scenario according to an embodiment of this application. As shown in FIG. 4c, in the application scenario, an electronic device captures visual information by using a sensor, and determines a current pose of the electronic device based on the visual information and a 3D map.

The 3D map is provided by the electronic device. To be specific, the electronic device creates the 3D map, then compresses the 3D map, and locally stores compressed data of the 3D map. When capturing the visual information, the electronic device performs decompression to obtain reconstructed data of the 3D map, and determines the current pose of the electronic device based on the captured visual information and the 3D map.

1. The electronic device creates the 3D map, compresses the 3D map to obtain the compressed data of the 3D map, and locally stores the compressed data.

It should be understood that the electronic device compresses the 3D map to save storage space.

2. The electronic device captures the visual information by using the sensor.

3. The electronic device decompresses the compressed data of the 3D map to obtain the reconstructed data of the 3D map.

4. The electronic device performs positioning on the 3D map based on the visual information, to obtain a pose corresponding to the visual information.

FIG. 4d is a schematic diagram of an application scenario according to an embodiment of this application. As shown in FIG. 4b, in the application scenario, a second electronic device captures visual information by using a sensor, and determines a current pose of the second electronic device based on the visual information and a 3D map from a server.

The 3D map is created by a first electronic device. To be specific, the first electronic device creates the 3D map, compresses the 3D map, and then sends compressed data of the 3D map to the server. Then, the server sends the compressed data of the 3D map to the second electronic device, and the second electronic device performs decompression to obtain reconstructed data of the 3D map, and determines the current pose of the second electronic device based on the captured visual information and the 3D map.

In this embodiment of this application, the first electronic device may create the 3D map in advance, compress the 3D map, and transmit the compressed 3D map to the server. In this way, transmission bandwidth can be reduced.

1. The first electronic device creates the 3D map, and compresses the 3D map to obtain the compressed data of the 3D map.
2. The first electronic device sends the compressed data of the 3D map to the server.

The first electronic device compresses the 3D map before transmitting the 3D map, so that transmission bandwidth can be reduced, and transmission efficiency can be improved.

3. The second electronic device sends a map download request to the server.

The second electronic device may send the map download request in the trigger manner shown in FIG. 4a.

4. The server sends the compressed data of the 3D map to the second electronic device.
5. The second electronic device decompresses the compressed data of the 3D map to obtain the reconstructed data of the 3D map.
6. The second electronic device captures the visual information by using the sensor.
7. The second electronic device performs positioning on the 3D map based on the visual information, to obtain a pose corresponding to the visual information.

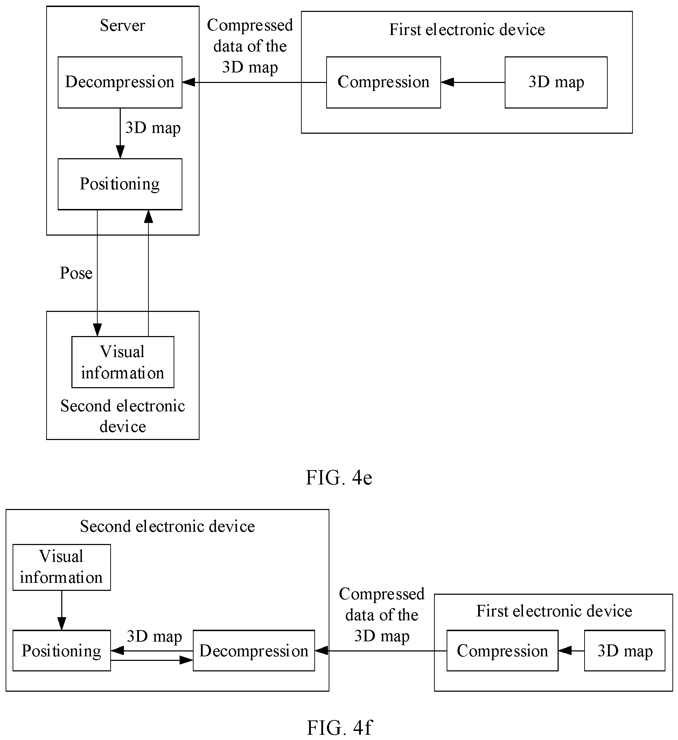

FIG. 4e is a schematic diagram of an application scenario according to an embodiment of this application. As shown in FIG. 4c, in the application scenario, a second electronic device captures visual information by using a sensor, and a server determines a current pose of the second electronic device based on the visual information from the second electronic device and a 3D map from a first electronic device.

The 3D map is created by the first electronic device. To be specific, the first electronic device creates the 3D map, compresses the 3D map, and then sends compressed data of the 3D map to the server. The server performs decompression to obtain reconstructed data of the 3D map, and determines the current pose of the second electronic device based on the visual information from the second electronic device and the 3D map.

1. The first electronic device creates the 3D map, and compresses the 3D map to obtain the compressed data of the 3D map.
2. The first electronic device sends the compressed data of the 3D map to the server.
3. The second electronic device captures the visual information by using the sensor.
4. The second electronic device sends a positioning request to the server, where the positioning request carries the visual information.
5. The server decompresses the compressed data of the 3D map to obtain the reconstructed data of the 3D map.
6. The server performs positioning on the 3D map based on the visual information, to obtain a pose corresponding to the visual information.
7. The server sends the pose obtained through positioning to the second electronic device.

FIG. 4f is a schematic diagram of an application scenario according to an embodiment of this application. As shown in FIG. 4d, in the application scenario, a second electronic device captures visual information by using a sensor, and determines a current pose of the second electronic device based on the visual information and a 3D map from a first electronic device.

The 3D map is created by the first electronic device. To be specific, the first electronic device creates the 3D map, compresses the 3D map, and then sends compressed data of the 3D map to the second electronic device. The second electronic device performs decompression to obtain reconstructed data of the 3D map, and determines the current pose of the second electronic device based on the captured visual information and the 3D map from the first electronic device.

1. The first electronic device creates the 3D map, compresses the 3D map to obtain the compressed data of the 3D map, and locally stores the compressed data.
2. The second electronic device sends a map download request to the first electronic device.
3. The first electronic device sends the compressed data of the 3D map to the second electronic device.
4. The second electronic device decompresses the compressed data of the 3D map to obtain the reconstructed data of the 3D map.
5. The second electronic device captures the visual information by using the sensor.
6. The second electronic device performs positioning on the 3D map based on the visual information, to obtain a pose corresponding to the visual information.

In the embodiments shown in FIG. 4a to FIG. 4f, a used positioning algorithm may include the following:

(1) Extract a to-be-retrieved area descriptor from the visual information, where an algorithm for extracting the to-be-retrieved area descriptor is consistent with an algorithm for extracting an area descriptor from the 3D map.

(2) Extract a to-be-retrieved 3D map point from the visual information, and obtain a to-be-retrieved 3D map point spatial location and a to-be-retrieved 3D map point descriptor, where an algorithm for extracting the to-be-retrieved 3D map point descriptor is consistent with an algorithm for extracting a 3D map point descriptor from the 3D map.

(3) Perform, based on the to-be-retrieved area descriptor, retrieval in a plurality of area descriptors included in data of the 3D map, to obtain a plurality of candidate area descriptors.

In embodiments of this application, a distance between the to-be-retrieved area descriptor and each of the plurality of area descriptors may be calculated. The distance may include a Hamming distance, a Manhattan distance, a Euclidean distance, or the like. Then, at least one area descriptor that meets a condition (for example, a distance is less than a threshold) is selected as a candidate area descriptor.

(4) Perform matching on the to-be-retrieved 3D map point descriptor and each of 3D map point descriptors corresponding to the plurality of candidate area descriptors, where the matching is to calculate a similarity between the to-be-retrieved 3D map point descriptor and each of the 3D map point descriptors corresponding to the plurality of candidate area descriptors, to find a most similar 3D map point.

(5) Obtain the pose of the electronic device through calculation based on the found 3D map point by using a pose solution algorithm like perspective-n-point (perspective-n-point, PnP) camera pose estimation or efficient perspective-n-point camera pose estimation (efficient perspective-n-point camera pose estimation, EPnP).

The embodiments shown in FIG. 4a to FIG. 4f all relate to compression on the 3D map. Embodiments of this application provide a plurality of apparatus frameworks for performing the foregoing compression. The following describes the plurality of apparatus frameworks.

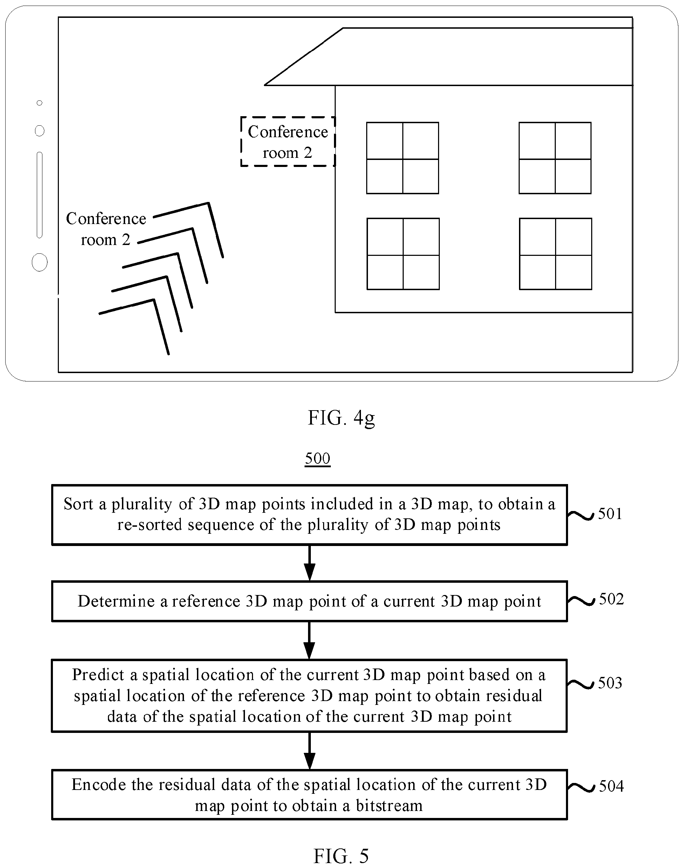

In any one of the application scenarios in FIG. 4a to FIG. 4f, positioning is performed based on the 3D map in embodiments of this application, to obtain the current pose of the electronic device. The pose may be applied to fields such as AR navigation, AR human-computer interaction, assisted driving, and autonomous driving. For example, AR navigation is performed based on the pose. FIG. 4g is a schematic diagram of a user interface displayed by an electronic device according to an embodiment of this application. The electronic device may display, based on the pose, the user interface shown in FIG. 4g. The user interface may include a navigation arrow indication for navigation to a conference room 2, and the navigation arrow indication for navigation to the conference room 2 may be a virtual object obtained locally or obtained from a server based on the pose. The user interface may further include visual information captured by a sensor, for example, a building shown in FIG. 4g. A user goes to the conference room 2 with reference to the user interface of the electronic device shown in FIG. 4g.

FIG. 5 is a flowchart of a process 500 of a 3D map encoding method according to an embodiment of this application. As shown in FIG. 5, the process 500 may be performed by an encoding apparatus. The encoding apparatus may be used in a server or an electronic device in the foregoing embodiments, and in particular, a device that needs to compress and send a 3D map, for example, the server in the embodiment shown in FIG. 4a, or the first electronic device in the embodiments shown in FIG. 4d to FIG. 4f. The process 500 is described as a series of steps or operations. It should be understood that the process 500 may be performed in various orders and/or occur simultaneously, and is not limited to an execution order shown in FIG. 5. It is assumed that a spatial location of a 3D map is compressed in the encoding apparatus to obtain a bitstream of the spatial location of the 3D map, and then the bitstream of the spatial location of the 3D map is transmitted by the encoding apparatus. The process 500 including the following steps is performed to process data of the 3D map that is being processed currently.

Step 501: Sort a plurality of 3D map points included in the 3D map, to obtain a re-sorted sequence of the plurality of 3D map points.

In this embodiment of this application, the plurality of 3D map points may be sorted based on data of the plurality of 3D map points. Optionally, as described in the foregoing embodiments, data of a 3D map point may include a spatial location of the 3D map point. Therefore, the plurality of 3D map points may be sorted based on spatial locations of the plurality of 3D map points, to obtain the re-sorted sequence of the plurality of 3D map points.

In a possible implementation, the re-sorted sequence may be represented by a sequence. In the sequence, two adjacent 3D map points are associated based on a distance. The sequence may include a list, an array, a character string, and the like. A representation form of the sequence is not limited in this embodiment of this application.

In this embodiment of this application, a 3D map point that currently needs to be added to the sequence may be found, based on a previous 3D map point added to the sequence, from at least one 3D map point not added to the sequence. Optionally, a distance between each of the at least one 3D map point not added to the sequence and the previous 3D map point added to the sequence may be first determined. Then, a 3D map point that is in the at least one 3D map point not added to the sequence and that is closest to the previous 3D map point added to the sequence is added to the sequence, and arranged after the previous 3D map point added to the sequence. The plurality of 3D map points included in the 3D map include the at least one 3D map point not added to the sequence and at least one 3D map point that has been added to the sequence. It can be learned that, in the sequence obtained according to the foregoing process, two adjacent 3D map points are associated based on a distance. Usually, it may be considered that two 3D map points that are closer to each other have a higher similarity. In this way, the plurality of 3D map points sorted based on distances between the 3D map points can ensure at least a relatively high similarity between two adjacent 3D map points, so that an overall similarity between the plurality of 3D map points in the sequence is improved.

For example, it is assumed that the plurality of 3D map points in the 3D map include $\{(x_i, y_i, z_i)|i \in [1, n]\}$, where n is a positive integer greater than 2. First, any 3D map point is determined as a start 3D map point, and the start 3D map point is added to the sequence. Then, a distance between each of n-1 3D map points not added to the sequence and the start 3D map point is determined, a 3D map point closest to the start 3D map point is determined as the $2^{nd}$ 3D map point, and the $2^{nd}$ 3D map point is added to the sequence and arranged after the start 3D map point. Then, a distance between each of n-2 3D map points not added to the sequence and the $2^{nd}$ 3D map point is determined, a 3D map point closest to the $2^{nd}$ 3D map point is determined as the $3^{rd}$ 3D map point, and the $3^{rd}$ 3D map point is added to the sequence and arranged after the $2^{nd}$ 3D map point. This process is repeated, until the $n^{th}$ 3D map point is added to the sequence and arranged after the $(n-1)^{th}$ 3D map point, to obtain the re-sorted sequence.

Using n=6 as an example, the plurality of 3D map points in the 3D map include six 3D map points P1 to P6: $\{(x_1, y_1, z_1), (x_2, y_2, z_2), (x_3, y_3, z_3), (x_4, y_4, z_4), (x_5, y_5, z_5), (x_6, y_6, z_6)\}$. First, P3 $(x_3, y_3, z_3)$ is determined as the start 3D map point, and P3 is added to the sequence. Then, a distance between each of five 3D map points not added to the sequence and P3 is determined, the 3D map point P5 $(x_5, y_5, z_5)$ closest to P3 is added to the sequence, and P5 is arranged after P3. Then, a distance between each of four 3D map points not added to the sequence and P5 is determined, and the 3D map point P2 $(x_2, y_2, z_2)$ closest to P5 is added to the sequence and arranged after P5. Then, a distance between each of three 3D map points not added to the sequence and P2 is determined, and the 3D map point P4 $(x_4, y_4, z_4)$ closest to P2 is added to the sequence and arranged after P2. Then, a distance between each of two 3D map points not added to the sequence and P4 is determined, and the 3D map point P6 $(x_6, y_6, z_6)$ closest to P4 is added to the sequence and arranged after P4. In this case, a 3D map point not added to the sequence includes only one 3D map point P1 $(x_1, y_1, z_1)$, and the one 3D map point P1 may be directly added to the sequence and arranged after P6, to obtain a re-sorted sequence P3→P5→P2→P4→P6→P1.

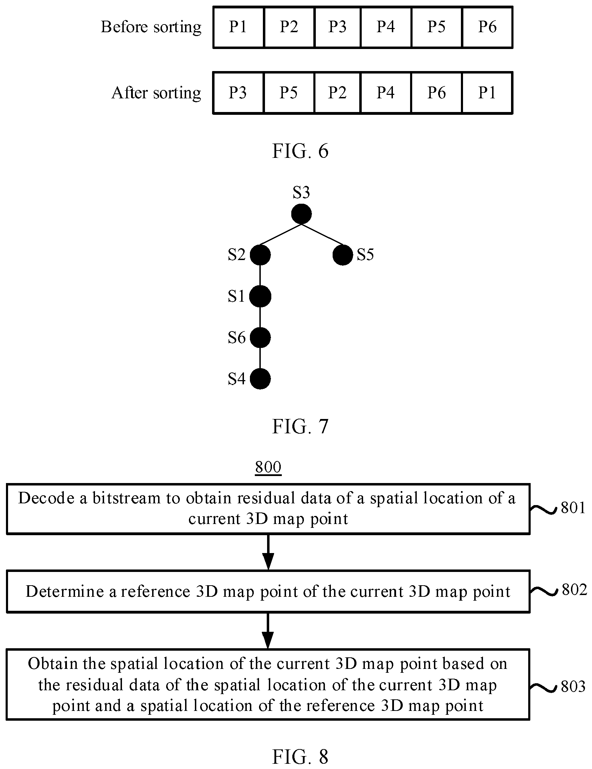

FIG. 6 is a schematic diagram of a sorting result according to an embodiment of this application. FIG. 6 shows a sorting result of the foregoing six 3D map points P1 to P6. As shown in FIG. 6, an order of the six points before the sorting is P1→P2→P3→P4→P5→P6, and an order of the six points after the sorting is P3→P5→P2→P4→P6→P1.

In a possible implementation, the re-sorted sequence may be represented by a topology tree. In the topology tree, a 3D map point located at a parent node and a 3D map point located at a child node are associated based on a distance. The topology tree may include a B tree, a B+ tree, a B* tree, a hash tree, and the like. A representation form of the topology tree is not limited in this embodiment of this application.

In this embodiment of this application, a 3D map point that currently needs to be added to the topology tree may be found, based on some or all 3D map points that have been added to the topology tree, from at least one 3D map point not added to the topology tree. Optionally, a distance between each of the at least one 3D map point not added to the topology tree and at least one 3D map point that has been added to the topology tree may be first determined. Then, a 3D map point that is in the at least one 3D map point not added to the topology tree and that is closest to the at least one 3D map point that has been added to the topology tree is added to the topology tree and arranged at a child-node location of a closest 3D map point in the at least one 3D map point that has been added to the topology tree. The closest 3D map point in the at least one 3D map point that has been added to the topology tree is a parent node of the 3D map point that is currently added to the child-node location of the closest 3D map point. It can be learned that, in the topology tree obtained according to the foregoing process, a parent node and a child node are associated based on a distance. Usually, it may be considered that two 3D map points that are closer to each other have a higher similarity. In this way, the plurality of 3D map points sorted based on distances between the 3D map points can ensure at least a relatively high similarity between two 3D map points on a parent node and a child node, so that an overall similarity between the plurality of 3D map points in the topology tree is improved.

For example, it is assumed that the plurality of 3D map points in the 3D map include $\{(x_i, y_i, z_i)|i \in [1, n]\}$, where n is a positive integer greater than 2. First, any 3D map point is determined as a start 3D map point, and the start 3D map point is added to the topology tree. Then, a distance between each of n-1 3D map points not added to the topology tree and the start 3D map point is determined, a 3D map point closest to the start 3D map point is determined as the $2^{nd}$ 3D map point, and the $2^{nd}$ 3D map point is added to the topology tree and arranged at a child-node location of the start 3D map point. Then, distances between each of n-2 3D map points not added to the topology tree and both the start 3D map point and the $2^{nd}$ 3D map point are determined to obtain 2(n-2) distances, a 3D map point that has a shortest distance in the 2(n-2) distances and that is not added to the topology tree is determined as the $3^{rd}$ 3D map point, and the $3^{rd}$ 3D map point is added to the topology tree and arranged at a child-node location of a 3D map point that has the shortest distance in the 2(n-2) distances and that has been added to the topology tree. This process is repeated, until a distance between the $n^{th}$ 3D map point and each of n-1 3D map points that have been added to the topology tree is determined to obtain n-1 distances. The $n^{th}$ 3D map point is added to the topology tree and arranged at a child-node location of a 3D map point that has a shortest distance in the n-1 distances and that has been added to the topology tree, to obtain the re-sorted sequence.

Using n=6 as an example, the plurality of 3D map points in the 3D map include six 3D map points S1 to S6: $\{(x_1, y_1, z_1), (x_2, y_2, z_2), (x_3, y_3, z_3), (x_4, y_4, z_4), (x_5, y_5, z_5), (x_6, y_6, z_6)\}$. First, S3 $(x_3, y_3, z_3)$ is determined as the start point, and S3 is added to the topology tree. Then, a distance between each of five 3D map points not added to the topology tree and S3 is determined to obtain five distances. In the five distances, a distance between S5 $(x_5, y_5, z_5)$ and S3 is the shortest, and S5 is added to the topology tree and arranged at a child-node location of S3. Then, distances between each of four 3D map points not added to the sequence and both S3 and S5 are determined to obtain eight distances. In the eight distances, a distance between S2 $(x_2, y_2, z_2)$ and S3 is the shortest, and S2 is added to the topology tree and arranged at a child-node location of S3. Then, distances between each of three 3D map points not added to the sequence and all of S3, S5, and S2 are determined to obtain nine distances. In the nine distances, a distance between S1 $(x_1, y_1, z_1)$ and S2 is the shortest, and S1 is added to the topology tree and arranged at a child-node location of S2. Then, distances between each of two 3D map points not added to the topology tree and all of S3, S5, S2, and S1 are determined to obtain eight distances. In the eight distances, a distance between S6 $(x_6, y_6, z_6)$ and S1 is the shortest, and S6 is added to the topology tree and arranged at a child-node location of S1. Then, distances between one 3D map point S4 $(x_4, y_4, z_4)$ not added to the topology tree and all of S3, S5, S2, S1, and S6 are determined to obtain five distances. In the five distances, a distance between S4 $(x_4, y_4, z_4)$ and S6 is the shortest, and S4 is added to the topology tree and arranged at a child-node location of S6.

FIG. 7 is a schematic diagram of a sorting result according to an embodiment of this application. FIG. 7 shows a sorting result of the foregoing six 3D map points S1 to S6. As shown in FIG. 7, S3 is a parent node of S5 and S2, S2 is a parent node of S1, S1 is a parent node of S6, and S6 is a parent node of S4.

In this embodiment of this application, a distance between any two of the plurality of 3D map points (for example, a distance between any 3D map point not added to the sequence or the topology tree and any 3D map point that has been added to the sequence or the topology tree) may be obtained based on spatial locations of the any two 3D map points. The distance may include a Euclidean distance, a Hamming distance, a Manhattan distance, or the like. A specific method for obtaining the distance is not limited in this embodiment of this application.

For example, a spatial location is represented by xyz-axis coordinates. 3D map point spatial locations of any two 3D map points are respectively (x1', y1', z1') and (x2', y2', z2'). A distance between the any two 3D map points may be: $d = \sqrt{(x_2' - x_1')^2 + (y_2' - y_1')^2 + (z_2' - z_1')^2}$. The manner for calculating the distance between the any two 3D map points is merely an example for description, and the manner for calculating the distance between the two 3D map points is not limited in this embodiment of this application.

It should be noted that when none of the plurality of 3D map points is added to the sequence, one start point needs to be first determined, and the start point is added to the sequence or the topology tree. The start point may be a 3D map point closest to a geometric center location of the plurality of 3D map points, or may be any 3D map point at an edge location in the plurality of 3D map points, or may be a 3D map point randomly selected from the plurality of 3D map points. Selection of the start point is not specifically limited in this embodiment of this application.

It should be noted that in the foregoing embodiment, the 3D map points, the quantity of 3D map points, the sorting result, the sorting manner, and the like are merely examples for description, and are not limited thereto.

Step 502: Determine a reference 3D map point of a current 3D map point.

The current 3D map point and the reference 3D map point belong to the 3D map, and the reference 3D map point is a 3D map point that has been encoded before the current 3D map point is encoded. The reference 3D map point is used to predict the current 3D map point. As described above, closer sorting locations of the plurality of 3D map points that are re-sorted indicates a shorter distance between the corresponding 3D map points, a higher similarity between the corresponding 3D map points, and better prediction effect.

In this embodiment of this application, there is at least one reference 3D map point. When there is one reference 3D map point, closer sorting locations of the reference 3D map point and the current 3D map point indicate a higher similarity between the reference 3D map point and the current 3D map point, better effect of predicting the current 3D map point subsequently, and a smaller data amount of residual data obtained through prediction. When there are a plurality of reference 3D map points, a combination of the plurality of reference 3D map points can implement more accurate prediction on the current 3D map point. This further reduces a data amount of residual data obtained through prediction.

Several sorting implementations are shown in the foregoing step 501. For different implementations, manners for determining the reference 3D map point of the current 3D map point are different.

Corresponding to the implementation based on the sequence in step 501, in a first example, there is one reference 3D map point. Optionally, a first 3D map point may be determined as the reference 3D map point, and the first 3D map point is a previous 3D map point of the current 3D map point in the sequence. The sequence shown in FIG. 6 is used as an example. If the current 3D map point is P2, the first 3D map point is P5. The first 3D map point and the current 3D map point are associated based on a distance in the re-sorted sequence, that is, a similarity between the first 3D map point and the current 3D map point is relatively high. The first 3D map point is determined as the reference 3D map point, and the current 3D map point is subsequently predicted based on the first 3D map point, so that prediction effect can be improved, and a data amount of the residual data obtained through prediction can be effectively reduced.

In a second example, there are a plurality of reference 3D map points. Optionally, both a first 3D map point and a second 3D map point may be determined as the reference 3D map point, and the first 3D map point is a previous 3D map point of the current 3D map point in the sequence. The second 3D map point is a previous 3D map point of the first 3D map point in the sequence. The sequence shown in FIG. 6 is still used as an example. If the current 3D map point is P2, the first 3D map point is P5, and the second 3D map point is P3. The first 3D map point and the current 3D map point are associated based on a distance in the re-sorted sequence, and the second 3D map point and the first 3D map point are associated based on a distance. In other words, a similarity between the first 3D map point and the current 3D map point is relatively high, a similarity between the second 3D map point and the first 3D map point is relatively high, and therefore a similarity between the second 3D map point and the current 3D map point is also relatively high. The first 3D map point and the second 3D map point are determined as the reference 3D map point, and the current 3D map is subsequently predicted with reference to the first 3D map point and the second 3D map point, so that prediction accuracy can be improved, and then a data amount of the residual data obtained through prediction is further reduced.

The foregoing selection of the reference 3D map point is merely an example for description. Optionally, n previous 3D map points of the current 3D map point in the sequence may all be determined as the reference 3D map point, where n>2, and n may be 3, 4, 5, or the like. Alternatively, at least one 3D map point that is before the current 3D map point in the sequence and whose distance from the current 3D map point is less than a distance threshold is determined as the reference 3D map point. Neither of a quantity of reference 3D map points and a manner of determining the reference 3D map point is limited in this embodiment of this application. For example, when both the first 3D map point and the second 3D map point are determined as the reference 3D map point, a previous 3D map point of the second 3D map point in the sequence may also be determined as the reference 3D map point.

Corresponding to the implementation based on the topology tree in step 501, in a first example, there is one reference 3D map point. Optionally, a third 3D map point may be determined as the reference 3D map point, and the third 3D map point is a 3D map point at a parent-node location of the current 3D map point in the topology tree. The topology tree shown in FIG. 7 is used as an example. If the current 3D map point is S6, the third 3D map point is S1. The third 3D map point and the current 3D map point are associated based on a distance in the re-sorted sequence, that is, a similarity between the third 3D map point and the current 3D map point is relatively high. The third 3D map point is determined as the reference 3D map point, and the current 3D map point is subsequently predicted based on the third 3D map point, so that prediction effect can be improved, and a data amount of the residual data obtained through prediction can be effectively reduced.

In a second example, there are a plurality of reference 3D map points. Optionally, both a third 3D map point and a fourth 3D map point may be determined as the reference 3D map point, the third 3D map point is a 3D map point at a parent-node location of the current 3D map point in the topology tree, and the fourth 3D map point is a 3D map point at a parent-node location of the third 3D map point in the topology tree. The topology tree shown in FIG. 7 is still used as an example. If the third 3D map point is S1, the fourth 3D map point is S2. The third 3D map point and the current 3D map point are associated based on a distance in the re-sorted sequence, and the fourth 3D map point and the third 3D map point are associated based on a distance. In other words, a similarity between the third 3D map point and the current 3D map point is relatively high, a similarity between the fourth 3D map point and the third 3D map point is relatively high, and therefore a similarity between the fourth 3D map point and the current 3D map point is also relatively high. The third 3D map point and the fourth 3D map point are determined as the reference 3D map point, and the current 3D map is subsequently predicted with reference to the third 3D map point and the fourth 3D map point, so that prediction accuracy can be improved, and then a data amount of the residual data obtained through prediction is further reduced.

The foregoing selection of the reference 3D map point is merely an example for description. Optionally, the third 3D map point, the fourth 3D map point, and a parent node of the fourth 3D map point may all be determined as the reference 3D map point. Alternatively, the third 3D map point, the fourth 3D map point, and a 3D map point that is in a parent node of the fourth 3D map point and whose distance from the current 3D map point is less than a distance threshold are determined as the reference 3D map point. Neither of a quantity of reference 3D map points and a manner of determining the reference 3D map point is limited in this embodiment of this application.

Step 503: Predict a spatial location of the current 3D map point based on a spatial location of the reference 3D map point to obtain residual data of the spatial location of the current 3D map point.

As described in the foregoing embodiment, the spatial location may be represented by xyz-axis coordinates, or may be represented by longitude-latitude coordinates, or may be represented by polar coordinates. In this embodiment of this application, an example in which xyz-axis coordinates are used for representation is used. The residual data of the spatial location of the current 3D map point may be obtained based on the spatial location of the reference 3D map point, the spatial location of the current 3D map point, and a residual formula.

The residual formula varies with the quantity of reference 3D map points. For example, when there is one reference 3D map point (for example, the first 3D map point or the third 3D map point in the foregoing step 502), the residual formula may include:

$$(r_{xi}, r_{yi}, r_{zi}) = a_1(x_i, y_i, z_i) - a_2(x_i', y_i', z_i'), i \in [1, n]$$

Herein, $(r_{xi}, r_{yi}, r_{zi})$ represents the residual data of the spatial location of the current 3D map point, $(x_i, y_i, z_i)$ represents the spatial location of the current 3D map point, and $(x_i', y_i', z_i')$ represents the spatial location of the reference 3D map point. With reference to the foregoing step 502, $(x_i', y_i', z_i')$ may represent a spatial location of the first 3D map point or the third 3D map point. Neither of values of $a_1$ and $a_2$ is limited in this embodiment of this application. For example, $a_1$ or $a_2$ may be 1.

When there are a plurality of reference 3D map points, for example, there are two reference 3D map points (for example, the first 3D map point and the second 3D map point or the third 3D map point and the fourth 3D map point in the foregoing step 502), the residual formula may include:

$$(r_{xi}, r_{yi}, r_{zi}) = b_1(x_i, y_i, z_i) - b_2(x_i', y_i', z_i') - b_3(x_i'', y_i'', z_i'')$$

Herein, $(r_{xi}, r_{yi}, r_{zi})$ represents the residual data of the spatial location of the current 3D map point, $(x_i, y_i, z_i)$ represents the spatial location of the current 3D map point, $(x_i', y_i', z_i')$ represents a spatial location of one reference 3D map point (for example, a reference 3D map point that is in the two reference 3D map points and that is closer to the current 3D map point) in the two reference 3D map points, and $(x_i'', y_i'', z_i'')$ represents a spatial location of the other reference 3D map point (for example, a reference 3D map point that is in the two reference 3D map points and that is farther from the current 3D map point) in the two reference 3D map points. With reference to the foregoing step 502, $(x_i', y_i', z_i')$ may represent a spatial location of the first 3D map point, and $(x_i'', y_i'', z_i'')$ represents a spatial location of the second 3D map point. Alternatively, (xi', yi', zi') may represent a spatial location of the third 3D map point, and (xi', yi'', zi'') represents a spatial location of the fourth 3D map point. None of values of $b_1$, $b_2$, and $b_3$ is limited in this embodiment of this application. For example, $b_1$ and $b_2$ may be 1, and $b_3$ may be -1.

It should be noted that the foregoing manner of obtaining the residual data of the spatial location of the current 3D map point through prediction is merely an example for description. A manner of predicting the spatial location of the current 3D map point based on the spatial location of the reference 3D map point is not limited in this embodiment of this application.

Step 504: Encode the residual data of the spatial location of the current 3D map point to obtain a bitstream.

Optionally, the residual data of the spatial location of the current 3D map point may be encapsulated to obtain the bitstream. After the bitstream is obtained, the bitstream may be stored. In this way, storage space of the encoding apparatus can be saved. Alternatively, the bitstream may be sent to a decoding apparatus. In this way, a data amount of the 3D map point can be reduced, so that bandwidth usage during transmission of the 3D map point is reduced, and transmission efficiency of the 3D map point is improved.

In this embodiment of this application, the encoded 3D map bitstream may include the residual data of the spatial location of the current 3D map point, and the residual data of the spatial location of the current 3D map point is obtained by predicting the spatial location of the current 3D map point by using the spatial location of the reference 3D map point.

As described in the foregoing embodiment, the reference 3D map point may be selected from the plurality of 3D map points that are sorted.

In a possible implementation, the plurality of 3D map points are sorted based on a sequence, and two adjacent 3D map points in the sequence are associated based on a distance. The sorting based on the sequence includes: adding, to the sequence, a 3D map point that is in at least one 3D map point not added to the sequence and that is closest to a previous 3D map point added to the sequence, and arranging the 3D map point after the previous 3D map point added to the sequence, where the plurality of 3D map points include the at least one 3D map point not added to the sequence.

In the sequence-based sorting manner, the reference 3D map point may be a first 3D map point, and the first 3D map point is a previous 3D map point of the current 3D map point in the sequence. Alternatively, the reference 3D map point may include a first 3D map point and a second 3D map point, the first 3D map point is a previous 3D map point of the current 3D map point in the sequence, and the second 3D map point is a previous 3D map point of the first 3D map point in the sequence.

In a possible implementation, the plurality of 3D map points are sorted based on a topology tree, and in the topology tree, a 3D map point located at a parent node and a 3D map point located at a child node are associated based on a distance. The sorting based on the topology tree includes: adding, to the topology tree, a 3D map point that is in at least one 3D map point not added to the topology tree and that is closest to at least one 3D map point that has been added to the topology tree, and arranging the 3D map point at a child-node location of a closest 3D map point in the at least one 3D map point that has been added to the topology tree, where the plurality of 3D map points include the at least one 3D map point not added to the topology tree.

In the topology tree-based sorting manner, the reference 3D map point may be a third 3D map point, and the third 3D map point is a 3D map point at a parent-node location of the current 3D map point in the topology tree. Alternatively, the reference 3D map point may include a third 3D map point and a fourth 3D map point, the third 3D map point is a 3D map point at a parent-node location of the current 3D map point in the topology tree, and the fourth 3D map point is a 3D map point at a parent-node location of the third 3D map point in the topology tree.

It should be understood that the reference 3D map point may alternatively be another 3D map point before the current 3D map point in a corresponding sorting manner, and there may be one or more reference 3D map points. This is not specifically limited in this embodiment of this application.

The foregoing embodiment is described by using an example in which the plurality of 3D map points included in the 3D map are sorted. Optionally, the plurality of 3D map points may not be sorted, that is, the foregoing step 501 may not be performed. In this case, any at least one of encoded 3D map points may be determined as the reference 3D map point.

Optionally, after the plurality of 3D map points are sorted, the encoding apparatus may not determine the reference 3D map point of the current 3D map point, that is, the foregoing step 502 may not be performed. In this case, in step 503, the encoding apparatus may directly predict the spatial location of the current 3D map point based on a spatial location of a reference 3D map point defined in a preset rule. For example, when the re-sorted sequence is in a form of a sequence, the preset rule may include: determining a first 3D map point as the reference 3D map point, where the first 3D map point is a previous 3D map point of the current 3D map point in the sequence; or determining both a first 3D map point and a second 3D map point as the reference 3D map point, where the first 3D map point is a previous 3D map point of the current 3D map point in the sequence, and the second 3D map point is a previous 3D map point of the first 3D map point in the sequence; or determining n previous 3D map points of the current 3D map point in the sequence as the reference 3D map point, where n>2. For the determining rule, refer to step 502. Details are not described in this embodiment of this application. When the re-sorted sequence is in a form of a topology tree, the preset rule may include: determining a third 3D map point as the reference 3D map point, where the third 3D map point is a 3D map point at a parent-node location of the current 3D map point in the topology tree; or determining both a third 3D map point and a fourth 3D map point as the reference 3D map point, where the third 3D map point is a 3D map point at a parent-node location of the current 3D map point in the topology tree, and the fourth 3D map point is a 3D map point at a parent-node location of the third 3D map point in the topology tree; or determining all of a third 3D map point, a fourth 3D map point, and a parent node of the fourth 3D map point as the reference 3D map point. For the determining rule, refer to step 502. Details are not described in this embodiment of this application.

It should be noted that the encoding apparatus needs to obtain the residual data of the spatial location of the current 3D map point based on the reference 3D map point, and then encode the residual data. After the bitstream is sent to the decoding apparatus, the decoding apparatus needs to obtain the spatial location of the current 3D map point based on the reference 3D map point. Therefore, it needs to be ensured that the reference 3D map point of the decoding apparatus is consistent with that of the encoding apparatus. The following describes an implementation process of ensuring consistency of reference 3D map points of the decoding apparatus and the encoding apparatus.

When the re-sorted sequence is in a form of a sequence, the encoding apparatus may send the sequence and a rule for determining the reference 3D map point to the decoding apparatus. Optionally, for the determining rule, refer to the foregoing preset rule. Details are not described in this embodiment of this application.

Alternatively, the encoding apparatus sends indication information of the reference 3D map point to the decoding apparatus. Optionally, the encoding apparatus may separately send the indication information of the reference 3D map point to the decoding apparatus, or may add the indication information of the reference 3D map point to the bitstream obtained by encoding the residual data of the spatial location of the current 3D map point. A manner of sending the indication information of the reference 3D map point is not limited in this embodiment of this application. For example, the indication information of the reference 3D map point may include a map point identifier or the like.

Alternatively, when encoding the 3D map points, the encoding apparatus sequentially encodes the 3D map points in an order of the 3D map points in the sequence. An order of residual data of spatial locations of 3D map points in the bitstream received by the decoding apparatus is the same as the order of the 3D map points in the sequence. Therefore, the encoding apparatus may not need to send the sequence or the indication information of the reference 3D map point to the decoding apparatus, and the encoding apparatus may send only the rule for determining the reference 3D map point to the decoding apparatus. For the determining rule, refer to the foregoing embodiment. Details are not described in this embodiment of this application.

In another implementation, when the re-sorted sequence is in a form of a topology tree, the encoding apparatus needs to encode a structure of the topology tree to obtain a bitstream of the topology tree, and send the bitstream of the topology tree and a rule for determining the reference 3D map point to the decoding apparatus. Optionally, for the determining rule, refer to the foregoing preset rule. Details are not described in this embodiment of this application. Optionally, the encoding apparatus may separately send the bitstream of the topology tree to the decoding apparatus, or may add the bitstream of the topology tree to the bitstream obtained by encoding the residual data of the spatial location of the current 3D map point. A manner of sending the topology tree is not limited in this embodiment of this application.

Alternatively, the encoding apparatus does not need to send the bitstream of the topology tree to the decoding apparatus, but directly sends the indication information of the reference 3D map point to the decoding apparatus. For a process of sending the indication information, refer to the foregoing implementation. Details are not described in this embodiment of this application.

In another implementation, when the encoding apparatus determines any at least one of encoded 3D map points as the reference 3D map point, the encoding apparatus may send indication information of the reference 3D map point to the decoding apparatus. For a process of sending the indication information, refer to the foregoing implementation. Details are not described in this embodiment of this application.

In this embodiment of this application, attribute information of the current 3D map point other than the spatial location may be further predicted based on a location of the current 3D map point in the re-sorted sequence, to obtain a bitstream.

In conclusion, according to the 3D map encoding method provided in this embodiment of this application, the spatial location of the current 3D map point is predicted based on the spatial location of the reference 3D map point to obtain the residual data of the spatial location of the current 3D map point, and then the residual data of the spatial location of the current 3D map point is encoded to obtain the bitstream. A data amount of the residual data is relatively small. When the encoding apparatus stores the bitstream, storage space for storing the 3D map by the encoding apparatus can be reduced. When the encoding apparatus sends the bitstream, bandwidth usage during transmission of the 3D map can be reduced, and transmission efficiency of the 3D map can be improved.

In addition, the plurality of 3D map points included in the 3D map may be first sorted to obtain the re-sorted sequence of the plurality of 3D map points, and then the reference 3D map point is determined based on the re-sorted sequence. In this way, a similarity between the reference 3D map point and the current 3D map point can be increased, an amount of the residual data after prediction can be reduced, and a data amount of the 3D map can be further reduced. This further reduces the storage space for storing the 3D map by the encoding apparatus, or further reduces the bandwidth usage during transmission of the 3D map and further improves the transmission efficiency of the 3D map.

An order in the method provided in this embodiment of this application may be appropriately adjusted, or steps may be correspondingly added or deleted as required. Any modification method readily figured out by a person skilled in the art within the technical scope disclosed in this application shall fall within the protection scope of this application. For example, step 501 and/or step 502 may not be performed. This is not limited in this embodiment of this application.

FIG. 8 is a flowchart of a process 800 of a 3D map decoding method according to an embodiment of this application. As shown in FIG. 8, the process 800 may be performed by a decoding apparatus. The decoding apparatus may be used in a server or an electronic device in the foregoing embodiments, for example, the electronic device in the embodiment shown in FIG. 4a, or the second electronic device in the embodiments shown in FIG. 4d and FIG. 4f. The process 800 is described as a series of steps or operations. It should be understood that the process 800 may be performed in various orders and/or occur simultaneously, and is not limited to an execution order shown in FIG. 8. It is assumed that a bitstream of a spatial location of a 3D map is received by the decoding apparatus, and decoding is performed in the decoding apparatus to obtain the spatial location of the 3D map. The process 800 including the following steps is performed to process the bitstream of the 3D map that is currently being processed.

Step 801: Decode the bitstream to obtain residual data of a spatial location of a current 3D map point.

Optionally, an inverse process of encoding may be performed on the bitstream to obtain the residual data of the spatial location of the current 3D map point. Optionally, when an encoding apparatus encapsulates the residual data, the decoding apparatus may decapsulate the bitstream to obtain the residual data.

Step 802: Determine a reference 3D map point of the current 3D map point.

The current 3D map point and the reference 3D map point belong to the 3D map, and the reference 3D map point is a 3D map point that has been encoded before the current 3D map point is encoded.

The reference 3D map point determined by the decoding apparatus needs to be consistent with a reference 3D map point determined by the encoding apparatus.

When a plurality of 3D map points are sorted in a sequence, if the decoding apparatus receives the sequence and a rule for determining the reference 3D map point, the decoding apparatus may determine the reference 3D map point based on the sequence and the determining rule. For example, the determining rule may be: determining a first 3D map point as the reference 3D map point, where the first 3D map point is a previous 3D map point of the current 3D map point in the sequence. For example, if the sequence is P3→P5→P2→P4→P6→P5, and the current 3D map point is P4, the decoding apparatus may determine P2 as the reference 3D map point.

Alternatively, the determining rule may be: determining both a first 3D map point and a second 3D map point as the reference 3D map point, where the first 3D map point is a previous 3D map point of the current 3D map point in the sequence, and the second 3D map point is a previous 3D map point of the first 3D map point in the sequence. For example, if the sequence is P3→P5→P2→P4→P6→P5, and the current 3D map point is P4, the decoding apparatus may determine P2 and P5 as the reference 3D map point.

If the decoding apparatus receives only the rule for determining the reference 3D map point, the decoding apparatus may determine the reference 3D map point based on the determining rule and an order of residual data of spatial locations of 3D map points in the received bitstream. For example, the determining rule may be: determining a first 3D map point as the reference 3D map point, where the first 3D map point is a previous decoded 3D map point of the current 3D map point (that is, a previous 3D map point of the current 3D map point in the sequence).

Alternatively, the determining rule may be: determining both a first 3D map point and a second 3D map point as the reference 3D map point, where the first 3D map point is a previous decoded 3D map point of the current 3D map point (that is, a previous 3D map point of the current 3D map point in the sequence), and the second 3D map point is a previous decoded 3D map point of the first 3D map point (that is, a previous 3D map point of the first 3D map point in the sequence). For this determining manner, refer to the foregoing embodiments. Details are not described in this embodiment of this application.

When a plurality of 3D map points are sorted in a topology tree, if the decoding apparatus receives a bitstream of the topology tree, the decoding apparatus may decode the bitstream of the topology tree to obtain a structure of the topology tree, and determine the reference 3D map point based on the structure of the topology tree and a determining rule. For example, the determining rule may be: determining a third 3D map point as the reference 3D map point, where the third 3D map point is a parent-node 3D map point of the current 3D map point (that is, a 3D map point at a parent-node location of the current 3D map point in the topology tree). For example, if the structure of the topology tree is shown in FIG. 7, and the current 3D map point is S6, the decoding apparatus may determine S1 as the reference 3D map point.

Alternatively, the determining rule is: determining both a third 3D map point and a fourth 3D map point as the reference 3D map point, where the third 3D map point is a parent-node 3D map point of the current 3D map point, and the fourth 3D map point is a parent-node 3D map point of the third 3D map point (that is, a 3D map point at a parent-node location of the third 3D map point in the topology tree). For example, if the structure of the topology tree is shown in FIG. 7, and the current 3D map point is S6, the decoding apparatus may determine S1 and S2 as the reference 3D map point.

If the decoding apparatus receives indication information of the reference 3D map point, the decoding apparatus may directly determine the reference 3D map point based on the indication information.

For this process, refer to the foregoing encoding-side embodiment. Details are not described in this embodiment of this application.

Step 803: Obtain the spatial location of the current 3D map point based on the residual data of the spatial location of the current 3D map point and a spatial location of the reference 3D map point.

In a possible implementation, a predicted value of the spatial location of the current 3D map point may be obtained based on the spatial location of the reference 3D map point, and then the residual data of the spatial location of the current 3D map point is added to the obtained predicted value of the spatial location of the current 3D map point to obtain the spatial location of the current 3D map point.

In this embodiment of this application, an example in which a spatial location is represented by xyz-axis coordinates is used. The spatial location of the current 3D map point may be obtained based on the residual data of the spatial location of the current 3D map point, the spatial location of the reference 3D map point, and a residual formula.

Corresponding to the foregoing step 503, when there is one reference 3D map point (for example, the first 3D map point or the third 3D map point in the foregoing step 502), the spatial location of the current 3D map point may be:

$$(x_i, y_i, z_i) = [(r_{xi}, r_{yi}, r_{zi}) + a_2(x_i', y_i', z_i')]/a_1$$

When there are a plurality of reference 3D map points, for example, there are two reference 3D map points (for example, the first 3D map point and the second 3D map point or the third 3D map point and the fourth 3D map point in the foregoing step 502), the spatial location of the current 3D map point may be:

$$(x_i, y_i, z_i) = [(r_{xi}, r_{yi}, r_{zi}) + b_2(x_i', y_i', z_i') + b_3(x_i'', y_i'', z_i'')]/b_1$$

For this process, refer to step 503. Details are not described in this embodiment of this application.

In this embodiment of this application, attribute information of the current 3D map point other than the spatial location may be further obtained.

In this embodiment of this application, for the re-sorted sequences in the foregoing two forms (sequence and topology tree), when the encoding apparatus does not determine the reference 3D map point of the current 3D map point, but directly predicts the spatial location of the current 3D map point based on a spatial location of a reference 3D map point defined in a preset rule, the decoding apparatus may not determine the reference 3D map point of the current 3D map point, that is, step 802 may not be performed. In this case, in step 803, the decoding apparatus obtains the spatial location of the current 3D map point based on the residual data of the spatial location of the current 3D map point and the spatial location of the reference 3D map point defined in the preset rule. For this process, refer to the foregoing embodiment. Details are not described in this embodiment of this application.

In conclusion, according to the 3D map decoding method provided in this embodiment of this application, the bitstream is decoded to obtain the residual data of the spatial location of the current 3D map point, and then the spatial location of the current 3D map point is obtained based on the residual data of the spatial location of the current 3D map point and the spatial location of the reference 3D map point. The received bitstream is a bitstream of the residual data of the spatial location of the current 3D map point, and a data amount of the residual data is relatively small, so that bandwidth usage during transmission of the 3D map to the decoding apparatus can be reduced, and transmission efficiency of the 3D map can be improved.

In addition, the reference 3D map point of the current 3D map point may be first determined, and then the spatial location of the current 3D map point is obtained based on the spatial location of the determined reference 3D map point and the residual data of the spatial location of the current 3D map point. The encoding apparatus may first sort the plurality of 3D map points included in the 3D map to obtain the re-sorted sequence of the plurality of 3D map points, and then determine the reference 3D map point based on the re-sorted sequence. In this way, a similarity between the reference 3D map point and the current 3D map point can be increased, an amount of the residual data after prediction can be reduced, and a data amount of the 3D map can be further reduced. This further reduces the bandwidth usage during transmission of the 3D map to the decoding apparatus, and further improves the transmission efficiency of the 3D map.

An order in the method provided in this embodiment of this application may be appropriately adjusted, or steps may be correspondingly added or deleted as required. For example, step 802 may not be performed. Any modification method readily figured out by a person skilled in the art within the technical scope disclosed in this application shall fall within the protection scope of this application. This is not limited in embodiments of this application.

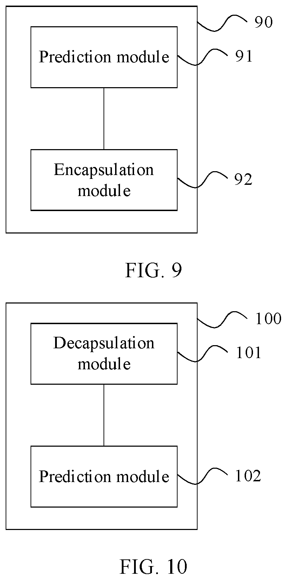

FIG. 9 is a diagram of a structure of a 3D map encoding apparatus 90 according to an embodiment of this application. As shown in FIG. 9, the encoding apparatus 90 may be used in an electronic device or a server in the foregoing embodiments, and in particular, a device that needs to compress and send a 3D map, for example, the server in the embodiment shown in FIG. 4a, or the first electronic device in the embodiments shown in FIG. 4d to FIG. 4f. The encoding apparatus 90 in this embodiment of this application may include a prediction module 91 and an encapsulation module 92.

The prediction module 91 is configured to predict a spatial location of a current 3D map point based on a spatial location of a reference 3D map point to obtain residual data of the spatial location of the current 3D map point, where the current 3D map point and the reference 3D map point belong to a 3D map, the reference 3D map point is a 3D map point that has been encoded before the current 3D map point is encoded, the 3D map includes a plurality of 3D map points, and the 3D map point includes a spatial location.

The encapsulation module 92 is configured to encode the residual data of the spatial location of the current 3D map point to obtain a bitstream.

In a possible implementation, the prediction module 91 is further configured to determine the reference 3D map point.

In a possible implementation, the prediction module 91 is further configured to sort the plurality of 3D map points to obtain a re-sorted sequence of the plurality of 3D map points.

In a possible implementation, the re-sorted sequence is represented by a sequence, and two adjacent 3D map points in the sequence are associated based on a distance.

In a possible implementation, the prediction module 91 is specifically configured to: add, to the sequence, a 3D map point that is in at least one 3D map point not added to the sequence and that is closest to a previous 3D map point added to the sequence, and arrange the 3D map point after the previous 3D map point added to the sequence, where the plurality of 3D map points include the at least one 3D map point not added to the sequence.

In a possible implementation, the prediction module 91 is specifically configured to determine a first 3D map point as the reference 3D map point, where the first 3D map point is a previous 3D map point of the current 3D map point in the sequence.

In a possible implementation, the prediction module 91 is specifically configured to determine both a first 3D map point and a second 3D map point as the reference 3D map point, where the first 3D map point is a previous 3D map point of the current 3D map point in the sequence, and the second 3D map point is a previous 3D map point of the first 3D map point in the sequence.

In a possible implementation, the re-sorted sequence is represented by a topology tree, and in the topology tree, a 3D map point located at a parent node and a 3D map point located at a child node are associated based on a distance.

In a possible implementation, the prediction module 91 is specifically configured to: add, to the topology tree, a 3D map point that is in at least one 3D map point not added to the topology tree and that is closest to at least one 3D map point that has been added to the topology tree, and arrange the 3D map point at a child-node location of a closest 3D map point in the at least one 3D map point that has been added to the topology tree, where the plurality of 3D map points include the at least one 3D map point not added to the topology tree.

In a possible implementation, the prediction module 91 is specifically configured to determine a third 3D map point as the reference 3D map point, where the third 3D map point is a 3D map point at a parent-node location of the current 3D map point in the topology tree.

In a possible implementation, the prediction module 91 is specifically configured to determine both a third 3D map point and a fourth 3D map point as the reference 3D map point, where the third 3D map point is a 3D map point at a parent-node location of the current 3D map point in the topology tree, and the fourth 3D map point is a 3D map point at a parent-node location of the third 3D map point in the topology tree.

In a possible implementation, the prediction module 91 is further configured to predict attribute information of the current 3D map point other than the spatial location based on a location of the current 3D map point in the re-sorted sequence, to obtain a bitstream.

In a possible implementation, the bitstream further includes indication information of the reference 3D map point.

In conclusion, according to the 3D map encoding apparatus provided in this embodiment of this application, the prediction module predicts the spatial location of the current 3D map point based on the spatial location of the reference 3D map point to obtain the residual data of the spatial location of the current 3D map point, and then the encapsulation module encodes the residual data of the spatial location of the current 3D map point to obtain the bitstream. A data amount of the residual data is relatively small. When the encoding apparatus stores the bitstream, storage space for storing the 3D map by the encoding apparatus can be reduced. When the encoding apparatus sends the bitstream, bandwidth usage during transmission of the 3D map can be reduced, and transmission efficiency of the 3D map can be improved.

In addition, the prediction module may first sort the plurality of 3D map points included in the 3D map to obtain the re-sorted sequence of the plurality of 3D map points, and then determine the reference 3D map point based on the re-sorted sequence. In this way, a similarity between the reference 3D map point and the current 3D map point can be increased, an amount of the residual data after prediction can be reduced, and a data amount of the 3D map can be further reduced. This further reduces the storage space for storing the 3D map by the encoding apparatus, or further reduces the bandwidth usage during transmission of the 3D map and further improves the transmission efficiency of the 3D map.

The encoding apparatus in this embodiment of this application may be configured to perform the technical solutions of the method embodiment shown in FIG. 5. Implementation principles and technical effects of the encoding apparatus are similar to those of the method. Details are not described herein again.

FIG. 10 is a diagram of a structure of a 3D map decoding apparatus 100 according to an embodiment of this application. As shown in FIG. 10, the decoding apparatus 100 may be used in an electronic device or a server in the foregoing embodiments, and in particular, a device that needs to receive and decompress a 3D map, for example, the server in the embodiment shown in FIG. 4a, or the first electronic device in the embodiments shown in FIG. 4d to FIG. 4f. The encoding apparatus 100 in this embodiment of this application may include a decapsulation module 101 and a prediction module 102.

The decapsulation module 101 is configured to decode a bitstream to obtain residual data of a spatial location of a current 3D map point.

The prediction module 102 is configured to obtain the spatial location of the current 3D map point based on the residual data of the spatial location of the current 3D map point and a spatial location of a reference 3D map point, where the current 3D map point and the reference 3D map point belong to a 3D map, the reference 3D map point is a 3D map point that has been decoded before the current 3D map point is decoded, the 3D map includes a plurality of 3D map points, and the 3D map point includes a spatial location.

In a possible implementation, the prediction apparatus 102 is specifically configured to: obtain a predicted value of the spatial location of the current 3D map point based on the spatial location of the reference 3D map point; and add the residual data of the spatial location of the current 3D map point to the obtained predicted value of the spatial location of the current 3D map point to obtain the spatial location of the current 3D map point.

In a possible implementation, the prediction module 102 is further configured to determine the reference 3D map point.

In a possible implementation, when the plurality of 3D map points are sorted in a sequence, the prediction module 102 is specifically configured to:

determine a first 3D map point as the reference 3D map point, where the first 3D map point is a previous decoded 3D map point of the current 3D map point.

In a possible implementation, when the plurality of 3D map points are sorted in a sequence, the prediction module 102 is specifically configured to determine both a first 3D map point and a second 3D map point as the reference 3D map point, where the first 3D map point is a previous decoded 3D map point of the current 3D map point, and the second 3D map point is a previous decoded 3D map point of the first 3D map point.

In a possible implementation, when the plurality of 3D map points are sorted in a topology tree, the prediction module 102 is specifically configured to determine a third 3D map point as the reference 3D map point, where the third 3D map point is a parent-node 3D map point of the current 3D map point.

In a possible implementation, when the plurality of 3D map points are sorted in a topology tree, the prediction module 102 is specifically configured to determine both a third 3D map point and a fourth 3D map point as the reference 3D map point, where the third 3D map point is a parent-node 3D map point of the current 3D map point, and the fourth 3D map point is a parent-node 3D map point of the third 3D map point.

In a possible implementation, when the plurality of 3D map points are sorted in a sequence, the prediction module 102 is specifically configured to determine the reference 3D map point based on indication information in the bitstream.

In a possible implementation, the prediction module 102 is further configured to obtain attribute information of the current 3D map point other than the spatial location.

In conclusion, according to the 3D map decoding apparatus provided in this embodiment of this application, the decapsulation module decodes the bitstream to obtain the residual data of the spatial location of the current 3D map point, and then the obtaining module obtains the spatial location of the current 3D map point based on the residual data of the spatial location of the current 3D map point and the spatial location of the reference 3D map point. The received bitstream is a bitstream of the residual data of the spatial location of the current 3D map point, and a data amount of the residual data is relatively small, so that bandwidth usage during transmission of the 3D map to the decoding apparatus can be reduced, and transmission efficiency of the 3D map can be improved.

In addition, the obtaining module may first determine the reference 3D map point of the current 3D map point, and then obtain the spatial location of the current 3D map point based on the spatial location of the determined reference 3D map point and the residual data of the spatial location of the current 3D map point. The encoding apparatus may first sort the plurality of 3D map points included in the 3D map to obtain the re-sorted sequence of the plurality of 3D map points, and then determine the reference 3D map point based on the re-sorted sequence. In this way, a similarity between the reference 3D map point and the current 3D map point can be increased, an amount of the residual data after prediction can be reduced, and a data amount of the 3D map can be further reduced. This further reduces the bandwidth usage during transmission of the 3D map to the decoding apparatus, and further improves the transmission efficiency of the 3D map.

The decoding apparatus in this embodiment of this application may be configured to perform the technical solutions of the method embodiment shown in FIG. 8. Implementation principles and technical effects of the decoding apparatus are similar to those of the method. Details are not described herein again.

In an implementation process, steps in the foregoing method embodiments can be implemented by using a hardware integrated logical circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor may be a microprocessor, or the processor may be any conventional processor or the like. The steps of the method disclosed in embodiments of this application may be directly performed by a hardware encoding processor, or may be performed by a combination of hardware and software modules in the encoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor.

The memory mentioned in the foregoing embodiments may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, many forms of RAMs are available, such as a static random access memory (static RAM, SRAM), a dynamic random access memory (dynamic RAM, DRAM), a synchronous dynamic random access memory (synchronous DRAM, SDRAM), double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory for the system and the method described in this specification aims to include but is not limited to these memories and any memory of another appropriate type.

A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, function units in embodiments of this application may be integrated into one processing unit, or each unit may exist alone physically, or two or more units may be integrated into one unit.

When the function is implemented in a form of a software function unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (a personal computer, a server, or a network device) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

**Claims**

1.  A 3D map encoding method, comprising:

    predicting a spatial location of a current 3D map point based on a spatial location of a reference 3D map point to obtain residual data of the spatial location of the current 3D map point, wherein the current 3D map point and the reference 3D map point belong to a 3D map, the reference 3D map point is a 3D map point that has been encoded before the current 3D map point is encoded, the 3D map comprises a plurality of 3D map points, and the 3D map point comprises a spatial location; and
    encoding the residual data of the spatial location of the current 3D map point to obtain a bitstream.

2.  The method according to claim 1, wherein before the predicting a spatial location of a current 3D map point based on a spatial location of a reference 3D map point to obtain residual data of the spatial location of the current 3D map point, the method further comprises:
determining the reference 3D map point.

3. The method according to claim 2, wherein before the determining the reference 3D map point, the method further comprises:
sorting the plurality of 3D map points to obtain a re-sorted sequence of the plurality of 3D map points.

4. The method according to claim 3, wherein the re-sorted sequence is represented by a sequence, and two adjacent 3D map points in the sequence are associated based on a distance.

5. The method according to claim 4, wherein the sorting the plurality of 3D map points to obtain a re-sorted sequence of the plurality of 3D map points comprises:
adding, to the sequence, a 3D map point that is in at least one 3D map point not added to the sequence and that is closest to a previous 3D map point added to the sequence, and arranging the 3D map point after the previous 3D map point added to the sequence, wherein the plurality of 3D map points comprise the at least one 3D map point not added to the sequence.

6. The method according to claim 4 or 5, wherein the determining the reference 3D map point comprises:
determining a first 3D map point as the reference 3D map point, wherein the first 3D map point is a previous 3D map point of the current 3D map point in the sequence.

7. The method according to claim 4 or 5, wherein the determining the reference 3D map point comprises:
determining both a first 3D map point and a second 3D map point as the reference 3D map point, wherein the first 3D map point is a previous 3D map point of the current 3D map point in the sequence, and the second 3D map point is a previous 3D map point of the first 3D map point in the sequence.

8. The method according to claim 3, wherein the re-sorted sequence is represented by a topology tree, and in the topology tree, a 3D map point located at a parent node and a 3D map point located at a child node are associated based on a distance.

9. The method according to claim 8, wherein the sorting the plurality of 3D map points to obtain a re-sorted sequence of the plurality of 3D map points comprises:
adding, to the topology tree, a 3D map point that is in at least one 3D map point not added to the topology tree and that is closest to at least one 3D map point that has been added to the topology tree, and arranging the 3D map point at a child-node location of a closest 3D map point in the at least one 3D map point that has been added to the topology tree, wherein the plurality of 3D map points comprise the at least one 3D map point not added to the topology tree.

10. The method according to claim 8 or 9, wherein the determining the reference 3D map point comprises:
determining a third 3D map point as the reference 3D map point, wherein the third 3D map point is a 3D map point at a parent-node location of the current 3D map point in the topology tree.

11. The method according to claim 8 or 9, wherein the determining the reference 3D map point comprises:
determining both a third 3D map point and a fourth 3D map point as the reference 3D map point, wherein the third 3D map point is a 3D map point at a parent-node location of the current 3D map point in the topology tree, and the fourth 3D map point is a 3D map point at a parent-node location of the third 3D map point in the topology tree.

12. The method according to any one of claims 3 to 11, wherein the method further comprises:
predicting attribute information of the current 3D map point other than the spatial location based on a location of the current 3D map point in the re-sorted sequence, to obtain a bitstream.

13. The method according to claim 1 or 2, wherein the bitstream further comprises indication information of the reference 3D map point.

14. A 3D map decoding method, comprising:

  decoding a bitstream to obtain residual data of a spatial location of a current 3D map point; and
  obtaining the spatial location of the current 3D map point based on the residual data of the spatial location of the current 3D map point and a spatial location of a reference 3D map point, wherein the current 3D map point and the reference 3D map point belong to a 3D map, the reference 3D map point is a 3D map point that has been decoded before the current 3D map point is decoded, the 3D map comprises a plurality of 3D map points, and the 3D map point comprises a spatial location.

15. The method according to claim 14, wherein the obtaining the spatial location of the current 3D map point based on the residual data of the spatial location of the current 3D map point and a spatial location of a reference 3D map point comprises:

obtaining a predicted value of the spatial location of the current 3D map point based on the spatial location of the reference 3D map point; and
adding the residual data of the spatial location of the current 3D map point to the obtained predicted value of the spatial location of the current 3D map point to obtain the spatial location of the current 3D map point.

16. The method according to claim 14 or 15, wherein before the obtaining the spatial location of the current 3D map point based on the residual data of the spatial location of the current 3D map point and a spatial location of a reference 3D map point, the method further comprises:
determining the reference 3D map point.

17. The method according to claim 16, wherein when the plurality of 3D map points are sorted in a sequence, the determining the reference 3D map point comprises:
determining a first 3D map point as the reference 3D map point, wherein the first 3D map point is a previous decoded 3D map point of the current 3D map point.

18. The method according to claim 16, wherein when the plurality of 3D map points are sorted in a sequence, the determining the reference 3D map point comprises:
determining both a first 3D map point and a second 3D map point as the reference 3D map point, wherein the first 3D map point is a previous decoded 3D map point of the current 3D map point, and the second 3D map point is a previous decoded 3D map point of the first 3D map point.

19. The method according to claim 16, wherein when the plurality of 3D map points are sorted in a topology tree, the determining the reference 3D map point comprises:
determining a third 3D map point as the reference 3D map point, wherein the third 3D map point is a parent-node 3D map point of the current 3D map point.

20. The method according to claim 16, wherein when the plurality of 3D map points are sorted in a topology tree, the determining the reference 3D map point comprises:
determining both a third 3D map point and a fourth 3D map point as the reference 3D map point, wherein the third 3D map point is a parent-node 3D map point of the current 3D map point, and the fourth 3D map point is a parent-node 3D map point of the third 3D map point.

21. The method according to claim 16, wherein when the plurality of 3D map points are sorted in a sequence, the determining the reference 3D map point comprises:
determining the reference 3D map point based on indication information in the bitstream.

22. The method according to any one of claims 14 to 21, wherein the method further comprises:
obtaining attribute information of the current 3D map point other than the spatial location.

23. A 3D map encoding apparatus, comprising:

a prediction module, configured to predict a spatial location of a current 3D map point based on a spatial location of a reference 3D map point to obtain residual data of the spatial location of the current 3D map point, wherein the current 3D map point and the reference 3D map point belong to a 3D map, the reference 3D map point is a 3D map point that has been encoded before the current 3D map point is encoded, the 3D map comprises a plurality of 3D map points, and the 3D map point comprises a spatial location; and
an encapsulation module, configured to encode the residual data of the spatial location of the current 3D map point to obtain a bitstream.

24. The apparatus according to claim 23, wherein the prediction module is further configured to determine the reference 3D map point.

25. The apparatus according to claim 24, wherein the prediction module is further configured to sort the plurality of 3D map points to obtain a re-sorted sequence of the plurality of 3D map points.

26. The apparatus according to claim 25, wherein the re-sorted sequence is represented by a sequence, and two adjacent 3D map points in the sequence are associated based on a distance.

27. The apparatus according to claim 26, wherein the prediction module is specifically configured to: add, to the sequence, a 3D map point that is in at least one 3D map point not added to the sequence and that is closest to a previous 3D map point added to the sequence, and arrange the 3D map point after the previous 3D map point added to the sequence, wherein the plurality of 3D map points comprise the at least one 3D map point not added to the sequence.

28. The apparatus according to claim 26 or 27, wherein the prediction module is specifically configured to determine a first 3D map point as the reference 3D map point, wherein the first 3D map point is a previous 3D map point of the current 3D map point in the sequence.

29. The apparatus according to claim 26 or 27, wherein the prediction module is specifically configured to determine both a first 3D map point and a second 3D map point as the reference 3D map point, wherein the first 3D map point is a previous 3D map point of the current 3D map point in the sequence, and the second 3D map point is a previous 3D map point of the first 3D map point in the sequence.

30. The apparatus according to claim 25, wherein the re-sorted sequence is represented by a topology tree, and in the topology tree, a 3D map point located at a parent node and a 3D map point located at a child node are associated based on a distance.

31. The apparatus according to claim 30, wherein the prediction module is specifically configured to: add, to the topology tree, a 3D map point that is in at least one 3D map point not added to the topology tree and that is closest to at least one 3D map point that has been added to the topology tree, and arrange the 3D map point at a child-node location of a closest 3D map point in the at least one 3D map point that has been added to the topology tree, wherein the plurality of 3D map points comprise the at least one 3D map point not added to the topology tree.

32. The apparatus according to claim 30 or 31, wherein the prediction module is specifically configured to determine a third 3D map point as the reference 3D map point, wherein the third 3D map point is a 3D map point at a parent-node location of the current 3D map point in the topology tree.

33. The apparatus according to claim 30 or 31, wherein the prediction module is specifically configured to:
determine both a third 3D map point and a fourth 3D map point as the reference 3D map point, wherein the third 3D map point is a 3D map point at a parent-node location of the current 3D map point in the topology tree, and the fourth 3D map point is a 3D map point at a parent-node location of the third 3D map point in the topology tree.

34. The apparatus according to any one of claims 25 to 33, wherein the prediction module is further configured to predict attribute information of the current 3D map point other than the spatial location based on a location of the current 3D map point in the re-sorted sequence, to obtain a bitstream.

35. The apparatus according to claim 23 or 24, wherein the bitstream further comprises indication information of the reference 3D map point.

36. A 3D map decoding apparatus, comprising:

a decapsulation module, configured to decode a bitstream to obtain residual data of a spatial location of a current 3D map point; and
a prediction module, configured to obtain the spatial location of the current 3D map point based on the residual data of the spatial location of the current 3D map point and a spatial location of a reference 3D map point, wherein the current 3D map point and the reference 3D map point belong to a 3D map, the reference 3D map point is a 3D map point that has been decoded before the current 3D map point is decoded, the 3D map comprises a plurality of 3D map points, and the 3D map point comprises a spatial location.

37. The apparatus according to claim 36, wherein the prediction apparatus is specifically configured to: obtain a predicted value of the spatial location of the current 3D map point based on the spatial location of the reference 3D map point; and add the residual data of the spatial location of the current 3D map point to the obtained predicted value of the spatial location of the current 3D map point to obtain the spatial location of the current 3D map point.

38. The apparatus according to claim 36 or 37, wherein the prediction module is further configured to determine the reference 3D map point.

39. The apparatus according to claim 38, wherein when the plurality of 3D map points are sorted in a sequence, the prediction module is specifically configured to determine a first 3D map point as the reference 3D map point, wherein the first 3D map point is a previous decoded 3D map point of the current 3D map point.

40. The apparatus according to claim 38, wherein when the plurality of 3D map points are sorted in a sequence, the prediction module is specifically configured to determine both a first 3D map point and a second 3D map point as the reference 3D map point, wherein the first 3D map point is a previous decoded 3D map point of the current 3D map point, and the second 3D map point is a previous decoded 3D map point of the first 3D map point.

41. The apparatus according to claim 38, wherein when the plurality of 3D map points are sorted in a topology tree, the prediction module is specifically configured to determine a third 3D map point as the reference 3D map point, wherein the third 3D map point is a parent-node 3D map point of the current 3D map point.

42. The apparatus according to claim 38, wherein when the plurality of 3D map points are sorted in a topology tree, the prediction module is specifically configured to determine both a third 3D map point and a fourth 3D map point as the reference 3D map point, wherein the third 3D map point is a parent-node 3D map point of the current 3D map point, and the fourth 3D map point is a parent-node 3D map point of the third 3D map point.

43. The apparatus according to claim 38, wherein when the plurality of 3D map points are sorted in a sequence, the prediction module is specifically configured to determine the reference 3D map point based on indication information in the bitstream.

44. The apparatus according to any one of claims 36 to 43, wherein the prediction module is further configured to obtain attribute information of the current 3D map point other than the spatial location.

45. A 3D map encoding device, comprising:

   one or more processors; and
   a memory, configured to store one or more programs, wherein
   when the one or more programs are executed by the one or more processors, the one or more processors are enabled to implement the method according to any one of claims 1 to 13.

46. A 3D map decoding device, comprising:

   one or more processors; and
   a memory, configured to store one or more programs, wherein
   when the one or more programs are executed by the one or more processors, the one or more processors are enabled to implement the method according to any one of claims 14 to 22.

47. A computer-readable storage medium, comprising a computer program, wherein when the computer program is executed on a computer, the computer is enabled to perform the method according to any one of claims 1 to 22.

48. A computer program product, wherein the computer program product comprises computer program code, and when the computer program code is run on a computer, the computer is enabled to perform the method according to any one of claims 1 to 22.

49. An encoded 3D map bitstream, wherein the encoded 3D map bitstream comprises residual data of a spatial location of a current 3D map point, the residual data of the spatial location of the current 3D map point is obtained by predicting the spatial location of the current 3D map point by using a spatial location of a reference 3D map point, the current 3D map point and the reference 3D map point belong to a 3D map, the reference 3D map point is a 3D map point that has been encoded before the current 3D map point is encoded, the 3D map comprises a plurality of 3D map points, and the 3D map point comprises a spatial location.

50. The bitstream according to claim 49, wherein the reference 3D map point is selected from the plurality of 3D map points that are sorted.

51. The bitstream according to claim 49, wherein the plurality of 3D map points are sorted based on a sequence, and two adjacent 3D map points in the sequence are associated based on a distance, wherein the sorting based on the sequence comprises: adding, to the sequence, a 3D map point that is in at least one 3D map point not added to the sequence and that is closest to a previous 3D map point added to the sequence, and arranging the 3D map point after the previous 3D map point added to the sequence, wherein the plurality of 3D map points comprise the at least one 3D map point not added to the sequence.

52. The bitstream according to claim 51, wherein the reference 3D map point comprises a first 3D map point, and the first 3D map point is a previous 3D map point of the current 3D map point in the sequence.

53. The bitstream according to claim 51 or 52, wherein the reference 3D map point comprises a first 3D map point and a second 3D map point, the first 3D map point is a previous 3D map point of the current 3D map point in the sequence, and the second 3D map point is a previous 3D map point of the first 3D map point in the sequence.

54. The bitstream according to claim 49, wherein the plurality of 3D map points are sorted based on a topology tree, and in the topology tree, a 3D map point located at a parent node and a 3D map point located at a child node are associated based on a distance, wherein the sorting based on the topology tree comprises: adding, to the topology tree, a 3D map point that is in at least one 3D map point not added to the topology tree and that is closest to at least one 3D map point that has been added to the topology tree, and arranging the 3D map point at a child-node location of a closest 3D map point in the at least one 3D map point that has been added to the topology tree, wherein the plurality of 3D map points comprise the at least one 3D map point not added to the topology tree.

55. The bitstream according to claim 54, wherein the reference 3D map point comprises a third 3D map point, and the third 3D map point is a 3D map point at a parent-node location of the current 3D map point in the topology tree.

56. The bitstream according to claim 54 or 55, wherein the reference 3D map point comprises a third 3D map point and a fourth 3D map point, the third 3D map point is a 3D map point at a parent-node location of the current 3D map point in the topology tree, and the fourth 3D map point is a 3D map point at a parent-node location of the third 3D map point in the topology tree.

Virtual
object

First electronic
device

Server

Second electronic
device

Second electronic
device

FIG. 1

Electronic device 20

Positioning module 27

| Wi-Fi positioning module | Bluetooth positioning module | Base station positioning module | Satellite positioning module |

Transceiver 28

Memory 22

Operating system

Data

Program code

Application

Virtual scene application

Map application

Image management application

Chip 21

Processor 211

Clock module 212

Power management module 213

29

User interface 23

Display component 24

Camera 25

Sensor 26

IMU

TOF

FIG. 2

EP 4 344 200 A1

Server 30

| Memory 302 | Processor 301 | Transceiver 303 |

304

FIG. 3

Electronic device

Visual information → Positioning ←→ Decompression

3D map

Compressed data of the 3D map

Server

Compression ← 3D map

FIG. 4a

Server

3D map → Compression/ Storage

Compressed data of the 3D map

Positioning ← Decompression

3D map

Pose

Visual information

Electronic device

FIG. 4b

Electronic device

3D map → Compression/ Storage

Compressed data of the 3D map

Visual information → Positioning

3D map

Decompression

FIG. 4c

Server

Compressed data of the 3D map

Compressed data of the 3D map

First electronic device

Compression ← 3D map

Second electronic device

Decompression

3D map

Positioning ← Visual information

FIG. 4d

```
┌─────────────────────────────┐          ┌────────────────────────────────────────┐
│         Server              │ Compressed│        First electronic device         │
│  ┌──────────────────┐       │ data of the│                                        │
│  │  Decompression   │◄──────│  3D map   │  ┌──────────────┐      ┌──────────┐    │
│  └──────────────────┘       │           │  │ Compression  │◄─────│  3D map  │    │
│          │                  │           │  └──────────────┘      └──────────┘    │
│          │ 3D map           │           └────────────────────────────────────────┘
│          ▼                  │
│  ┌──────────────────┐       │
│  │   Positioning    │       │
│  └──────────────────┘       │
│     │          ▲            │
└─────│──────────│────────────┘
      │          │
 Pose │          │
      ▼          │
┌─────────────────────────────┐
│  ┌──────────────────┐       │
│  │     Visual       │       │
│  │  information     │       │
│  └──────────────────┘       │
│   Second electronic         │
│        device               │
└─────────────────────────────┘
```

FIG. 4e

```
┌───────────────────────────────────────────┐              ┌──────────────────────────────────┐
│        Second electronic device           │ Compressed   │                                  │
│  ┌──────────────┐                          │ data of the  │     First electronic device      │
│  │   Visual     │                          │  3D map      │  ┌──────────────┐  ┌──────────┐ │
│  │ information  │                          │              │  │ Compression  │◄─│  3D map  │ │
│  └──────────────┘                          │              │  └──────────────┘  └──────────┘ │
│         │                                  │              └──────────────────────────────────┘
│         ▼           3D map                 │
│  ┌──────────────┐◄────────►┌─────────────┐ │◄─────
│  │ Positioning  │          │Decompression│◄┼──────
│  └──────────────┘          └─────────────┘ │
└───────────────────────────────────────────┘
```

FIG. 4f

FIG. 4g

500

```
┌─────────────────────────────────────────────────────┐
│ Sort a plurality of 3D map points included in a 3D   │∿ 501
│ map, to obtain a re-sorted sequence of the plurality │
│ of 3D map points                                     │
└─────────────────────────────────────────────────────┘
                         │
                         ▼
┌─────────────────────────────────────────────────────┐
│ Determine a reference 3D map point of a current 3D   │∿ 502
│ map point                                            │
└─────────────────────────────────────────────────────┘
                         │
                         ▼
┌─────────────────────────────────────────────────────┐
│ Predict a spatial location of the current 3D map     │∿ 503
│ point based on a spatial location of the reference   │
│ 3D map point to obtain residual data of the spatial  │
│ location of the current 3D map point                 │
└─────────────────────────────────────────────────────┘
                         │
                         ▼
┌─────────────────────────────────────────────────────┐
│ Encode the residual data of the spatial location of  │∿ 504
│ the current 3D map point to obtain a bitstream       │
└─────────────────────────────────────────────────────┘
```

FIG. 5

| Before sorting | P1 | P2 | P3 | P4 | P5 | P6 |
|---|---|---|---|---|---|---|

| After sorting | P3 | P5 | P2 | P4 | P6 | P1 |
|---|---|---|---|---|---|---|

FIG. 6

S3

S2    S5

S1

S6

S4

FIG. 7

800

| Decode a bitstream to obtain residual data of a spatial location of a current 3D map point | ～801 |
|---|---|

| Determine a reference 3D map point of the current 3D map point | ～802 |
|---|---|

| Obtain the spatial location of the current 3D map point based on the residual data of the spatial location of the current 3D map point and a spatial location of the reference 3D map point | ～803 |
|---|---|

FIG. 8

Prediction module — 90, 91

Encapsulation module — 92

FIG. 9

Decapsulation module — 100, 101

Prediction module — 102

FIG. 10

## INTERNATIONAL SEARCH REPORT

International application No.

**PCT/CN2021/098484**

**A.   CLASSIFICATION OF SUBJECT MATTER**

H04N 19/00(2014.01)i;  G06T 9/00(2006.01)i

According to International Patent Classification (IPC) or to both national classification and IPC

**B.   FIELDS SEARCHED**

Minimum documentation searched (classification system followed by classification symbols)

H04N; G06T

Documentation searched other than minimum documentation to the extent that such documents are included in the fields searched

Electronic data base consulted during the international search (name of data base and, where practicable, search terms used)

CNTXT; WPABSC; ENTXTC; WPABS; ENTXT; CNKI; IEEE: 地图, 点云, 三维, 3D, 位置, 坐标, 几何, 编码, 压缩, 解码, 预测, 残差, 差分, code, compress, position, coordinate, location, forecast, difference, residual error

**C.   DOCUMENTS CONSIDERED TO BE RELEVANT**

| Category* | Citation of document, with indication, where appropriate, of the relevant passages | Relevant to claim No. |
|---|---|---|
| X | CN 111213175 A (PANASONIC INTELLECTUAL PROPERTY CORPORATION OF AMERICA) 29 May 2020 (2020-05-29)<br>description, paragraphs [0064]-[0625], and figures 1-50 | 1-48 |
| X | CN 111699683 A (SHENZHEN DJI TECHNOLOGY CO., LTD.) 22 September 2020 (2020-09-22)<br>description, paragraphs [0058]-[0353], and figures 1-8 | 1-48 |
| X | US 2018053324 A1 (MITSUBISHI ELECTRIC RESEARCH LABORATORIES, INC.) 22 February 2018 (2018-02-22)<br>description, paragraphs [0017]-[0109], and figures 1-6 | 1-48 |
| A | CN 112119593 A (SHENZHEN DJI TECHNOLOGY CO., LTD.) 22 December 2020 (2020-12-22)<br>entire document | 1-48 |
| A | CN 112689997 A (SHENZHEN DJI TECHNOLOGY CO., LTD.) 20 April 2021 (2021-04-20)<br>entire document | 1-48 |

☐ Further documents are listed in the continuation of Box C.    ☑ See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **24 January 2022** | **24 February 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/098484**

| Box No. II | Observations where certain claims were found unsearchable (Continuation of item 2 of first sheet) |
|---|---|

This international search report has not been established in respect of certain claims under Article 17(2)(a) for the following reasons:

1. ☑ Claims Nos.: **49-56**
   because they relate to subject matter not required to be searched by this Authority, namely:

   [1]   Claims 49-56 set forth a 3D map encoded codestream, only characterized in that information of map points comprised in the 3D map encoded codestream is essentially an information expression method, which belongs to the subject matter which is excluded.

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

Form PCT/ISA/210 (continuation of first sheet) (January 2015)

**INTERNATIONAL SEARCH REPORT**
Information on patent family members

International application No.

**PCT/CN2021/098484**

| Patent document cited in search report | | | Publication date (day/month/year) | Patent family member(s) | | | Publication date (day/month/year) |
|---|---|---|---|---|---|---|---|
| CN | 111213175 | A | 29 May 2020 | JP | WO2019078292 | A1 | 05 November 2020 |
| | | | | US | 2020242811 | A1 | 30 July 2020 |
| | | | | WO | 2019078292 | A1 | 25 April 2019 |
| | | | | EP | 3699861 | A1 | 26 August 2020 |
| | | | | EP | 3699861 | A4 | 16 September 2020 |
| CN | 111699683 | A | 22 September 2020 | WO | 2020248187 | A1 | 17 December 2020 |
| US | 2018053324 | A1 | 22 February 2018 | JP | 2019521417 | A | 25 July 2019 |
| | | | | JP | 6676193 | B2 | 08 April 2020 |
| | | | | EP | 3501005 | A1 | 26 June 2019 |
| | | | | WO | 2018034253 | A1 | 22 February 2018 |
| CN | 112119593 | A | 22 December 2020 | WO | 2021012278 | A1 | 28 January 2021 |
| CN | 112689997 | A | 20 April 2021 | None | | | |

Form PCT/ISA/210 (patent family annex) (January 2015)